# EUROPEAN PATENT APPLICATION

(11) **EP 1 304 847 A2**
(43) Date of publication of application: **23.04.2003**
(21) Application number: 02007344.1
(22) Date of filing: 05.04.2002
(51) Int. Cl.: H04L 29/06

(54) **System and method for providing specific services to each of a plurality of terminals connected to a network**

(30) Priority: 22.10.2001 JP 2001322934
(71) Applicant: FUJITSU LIMITED, Kawasaki-shi, Kanagawa 211-8588 (JP)
(72) Inventor: Kakemizu, Mitsuaki, Fujitsu Limited, Kawasaki-shi, Kanagawa 211-8588 (JP); Yamamura, Shinya, Fujitsu Nishi-Nihon Comm.Sys.Ltd, Fukuoka-shi, Fukuoka 814-8588 (JP); Taniguchi, Hiroyuki, Fujitsu Limited, Kawasaki-shi, Kanagawa 211-8588 (JP)
(74) Representative: HOFFMANN - EITLE

(57) **Abstract**

A configuration is made by a server which comprises a service control information database written by using a network access identifier (RFC2486) as identification information of a terminal, makes a correspondence between a network access identifier and an IP address that a network device of a client assigns to the terminal at the timing of being connected to the terminal, and distributes to a necessary path service control information where the network access identifier is converted into the IP address, and a network device which performs a transfer control of a packet based on the service control information (policy) distributed from the server by using the IP address as the identification information of the client, so that a service control network, a server, a network device, a service information distribution method, and a service information distribution program, which can set control information of a network even in a network appliance having an unfixed address, can be provided.

## Description

### Background of the Invention

### Field of the Invention

The present invention relates to a service control network, a server, a network device, a service information distribution method, and a service information distribution program, which provide an individual service to each subscriber or terminal.

### Description of the Related Art

With the recent popularization of the Internet, it has been becoming possible to connect a very large number of terminals to a network. Especially, as the number of mobile terminals that can be connected to a network has been sharply increasing, so does the number of network devices (mainly routers) that are arranged on the network.

Service providers that provide communication services to subscribers have been providing a different service depending on each subscriber under contract to each subscriber. For example, the service providers can distribute a QoS (Quality of Service: service quality control), etc.

To provide an individual service to each subscriber or terminal, it is desirable to distribute service control information for each subscriber to all of communications nodes on a network in consideration of a mobile environment. However, the number of communications nodes arranged on a network is very large, and it is substantially impossible to distribute service control information of each subscriber to all of the nodes.

Accordingly, a system dynamically distributing service control information of subscribers that correspond to an irreducible minimum of communications nodes (for example, communications nodes on a communications path, to which service control information are actually distributed) without distributing service control information of each subscriber to all of communications nodes on a network is proposed. This system is implemented, for example, by distributing service control information of a mobile terminal to a communications node that is to newly accommodate the mobile terminal, when the mobile terminal moves from one communication area to another.

In a world of the Internet that uses the IPv4 (Internet Protocol Version 4) as a basic technology, a mechanism for dynamically obtaining an IP (Internet Protocol) address with DHCP (Dynamic Host Configuration Protocol) due to the exhaustion of IPv4 addresses, and for attempting to effectively use IP addresses is widely adopted. IPv6 (Internet Protocol Version 6), which is the basic protocol of the next generation of the Internet, provides a wide address space, and incorporates the mechanism for generating a dynamic address as a standard function. The challenge to a communication on the Internet is to cope with a dynamic address hereafter.

Additionally, on the Internet in these years, a server makes centralized management for a network, and services such as security, QoS, path distribution, etc. can be implemented for the network by specifying an IP address. However, a network appliance to be controlled must have a fixed address, and a network appliance having a dynamic address cannot be controlled.

Japanese Patent Publication No. 2001-169341, which the inventor of the present invention filed to the Japanese Patent Office and is opened public, is an invention to which a Mobile IP technique is applied. The application of this invention describes that a network management system (NMS: hereinafter referred to as a server)) is difficult to control a network in consideration of a mobile terminal, and requires a service control information distributing means which cooperates with a position registration operation, and discloses a technique transferring a service profile to an edge router.

### Summary of the Invention

An object of the present invention is to provide a service control network, a server, a network device, a service information distribution method, and a service information distribution program, which can distribute control information of a network even to a network appliance having an unfixed address, by preparing a service control information distributing means which cooperates with the mechanism for configuring a dynamic address.

Another object of the present invention is to provide an efficient filtering service using a service control information distributing means for a regulation service of an unauthenticated user, which is normally adopted along with an automatic address configuring means, and to provide a network service.

In a first aspect of the present invention, a service control network according to the present invention comprises a network device which accommodates a terminal, and a server which authenticates the terminal, and provides a service to the terminal. The server comprises a service control information database storing the identification information of a terminal by using a network access identifier, makes a correspondence between the network access identifier and an IP address that the network device accommodating the terminal assigns to the terminal at the timing of being connected to the terminal, and distributes to a necessary path service control information where the network access identifier is converted into the IP address. Additionally, the network device performs a packet transfer control of a packet based on the service control information that is distributed from the server by using the IP address as the identification of the terminal.

Furthermore, the server according to the present invention comprises a service control information database, a service profile controlling unit, and a service profile distributing unit.

In a second aspect of the present invention, the service control information database stores the identification information of a terminal by using a network access identifier. The service profile controlling unit comprises an address cache for making a correspondence between the IP address which the network device accommodating the terminal assigns to the terminal and the network access identifier, and converts the service control information into a format that the network device under the control of the server can interpret for a network control request which specifies the network access identifier. The service profile distributing unit identifies the distribution destination of the service control information, and distributes the service control information to the destination. Furthermore, the server according to the present invention makes a correspondence between the network access identifier and the IP address that the network device accommodating the terminal assigns to the terminal at the timing of being connected to the terminal, and distributes to a necessary path the service control information where the network access identifier is converted into the IP address.

In a third aspect of the present invention, the network device according to the present invention, which accommodates a terminal, comprises a service control information database in which a server which authenticates the terminal stores the identification information of the terminal by using a network access identifier, makes a correspondence between the network access identifier and the IP address that the network device accommodating the terminal assigns to the terminal at the timing of being connected to the terminal, distributes to a necessary path service control information where the network access identifier is converted into the IP address, and performs a packet transfer control of a packet based on the service control information which is distributed from the server by using the IP address as the identification of the terminal.

The network device according to the present invention comprises an attendant unit, and a service controlling unit. The attendant unit permits a network access of a user who makes an authentication request, and IP address assignment by exchanging authentication request and reply messages with an authentication controlling unit which is comprised by the server, detects a network access from a terminal based on the execution of an authentication operation for authenticating the terminal, and registers to an address cache a network access identifier of the terminal that makes an authentication request, and an IP address notified from the network device. The service controlling unit divides and manages multiplexed service control information that is notified from the server in units of terminals.

### Brief Description of the Drawings

Fig. 1 shows the configuration of a service control network in order to explain the principle of the present invention;
Fig. 2 shows the problems that the present invention is to solve so as to implement a service control network according to the present invention;
Fig. 3 shows a solution using a technique B of the present invention;
Fig. 4 shows the fundamental operations for setting static service control information;
Fig. 5 shows the fundamental operations for setting dynamic service control information;
Fig. 6 is a schematic diagram for explaining the difference between a technique A and the technique B of the present invention (No. 1);
Fig. 7 is a schematic diagram for explaining the difference between the techniques A and B of the present invention (No. 2);
Fig. 8 is a schematic diagram for explaining the difference between the techniques A and B of the present invention (No. 3);
Fig. 9 is a schematic diagram for explaining the difference between the techniques A and B of the present invention (No. 4);
Fig. 10 is a functional block diagram of the technique B of the present invention;
Fig. 11 shows the format of an AAA Request message (No. 1);
Fig. 12 shows the format of the AAA Request message (No. 2);
Fig. 13 shows the format of an AAA Reply message (No. 1);
Fig. 14 shows the format of the AAA Reply message (No. 2);
Fig. 15 shows the format of an AAA Teadown message;
Fig. 16 shows the format of a DIAMETER message;
Fig. 17 shows the format of an AMR message;
Fig. 18 shows the format of an AMA message;
Fig. 19 shows the format of an ASR message;
Fig. 20 shows the format of an ASA message;
Fig. 21 shows the format of an STR message;
Fig. 22 shows the format of an STA message;
Fig. 23 exemplifies a filter;
Fig. 24 exemplifies an address cache of a network device;
Fig. 25 exemplifies a service profile cache of the network device;
Fig. 26 is a flowchart showing the process of a packet controlling unit of the network device;
Fig. 27 shows the format of a hop-by-hop option;
Fig. 28 is a flowchart showing the process of an attendant of the network device (No. 1);
Fig. 29 is a flowchart showing the process of the attendant of the network device (No. 2);
Fig. 30 is a flowchart showing the process of a service controlling unit of the network device;
Fig. 31 is a flowchart showing the process of an access monitoring unit of the network device;
Fig. 32 exemplifies an authentication database/a service profile original;
Fig. 33 exemplifies an address cache of a server;
Fig. 34 exemplifies a service profile cache of the server;

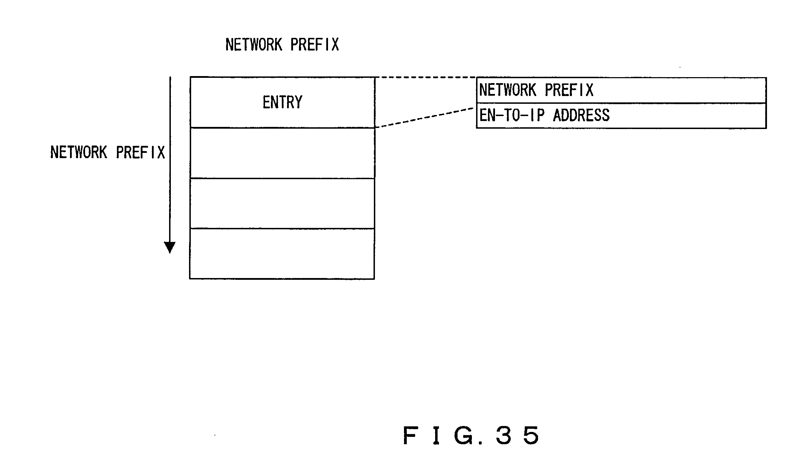

Fig. 35 exemplifies a correspondence table between a network prefix and EN;
Fig. 36 is a flowchart showing the process of an authentication controlling unit of the server;
Fig. 37 is a flowchart showing the process of a service profile controlling unit of the server (No. 1) ;
Fig. 38 is a flowchart showing the process of the service profile controlling unit of the server (No. 2);
Fig. 39 is a flowchart showing the process of a service profile distributing unit of the server;
Fig. 40 shows the configuration of a system according to a preferred embodiment (an example where an IPv6 network access is made with an AAA) of the present invention;
Fig. 41 shows the sequence of service registration (an example of setting a service profile original);
Fig. 42 shows an entire sequence (an example of distributing a service profile) when a host 1 obtains an address;
Fig. 43 shows the details of the process sequence of the network device;
Fig. 44 shows the details of the process sequence of the server;
Fig. 45 shows an entire sequence (an example of distributing a service profile) when a host 2 obtains an address after the host 1 obtains the address;
Fig. 46 shows an entire sequence when an edge node 1 autonomously obtains a service profile;
Fig. 47 shows the details of the process sequence showing the operations of the network device;
Fig. 48 shows the details of the process sequence of the server;
Fig. 49 shows an entire process sequence when an address lifetime of the host 1 expires;
Fig. 50 shows the details of the process sequence showing the operations of the network device;
Fig. 51 shows the details of the process sequence of the server;
Fig. 52 shows an entire sequence when the host 1 releases an address;
Fig. 53 shows the details of the process sequence showing the operations of the network device;
Fig. 54 shows the details of the process sequence of the server;
Fig. 55 shows the configuration of a system according to a preferred embodiment when a communication is made between domains;
Fig. 56 shows an entire sequence when a net 2 which makes roaming contract with a net 1 connects to a network, and obtains an address;
Fig. 57 shows the details of a server in a net 2 domain;
Fig. 58 shows the sequence (an example of applying a service to a data packet) when the host 1 transmits a packet to the host 2 in the case where a static filter has been set in the edge node 1;
Fig. 59 shows the sequence (an embodiment where a dynamic service is applied to a data packet) when a service profile is distributed to an edge node which accommodates a communication destination host by applying a fundamental service to the data packet from the edge node 1);
Fig. 60 shows the sequence in the case where packet filtering is dynamically performed;
Fig. 61 shows the configuration of the network device or the server; and
Fig. 62 explains the loading of a program according to the present invention into a computer.

### Description of the Preferred Embodiments

Hereinafter, preferred embodiments according to the present invention are described with reference to the drawings. Note that numbers enclosed with braces {} are sometimes used instead of the circled numbers in the drawings.

The present invention adopts the following configuration in order to solve the above described problems.

Namely, according to one preferred embodiment of the present invention, a service control network according to the present invention is configured by a server which comprises a service control information database where a network access identifier (RFC2486) is stored as the identification information of a terminal (a host, a client, a user terminal, or an application server), makes a correspondence between a network access identifier and an IP address that a network device of a client assigns to the terminal at the timing of being connected to the client, and distributes to a necessary path service control information where a network access identifier is converted into an IP address, and a network device which performs a transfer control of a packet based on the service control information (policy) distributed from the server by using the IP address as the identification of the client.

In the service control network, the server according to the present invention comprises : an address cache for making a correspondence between an IP address that the network device of the terminal (client) assigns to the terminal and a network access identifier; a service profile controlling unit converting the service control information into a format that a network device under the control of the server can interpret for a network control request which specifies a network access identifier from the server itself or a different entity (a network device, a server, or an application); and a service profile distributing unit identifying the distribution destination of the service profile, and distributing the service profile.

The server further comprises: an authentication controlling unit detecting a network access of a client based on the execution of an authentication operation for a user, and registering to the address cache the network identifier of a user who makes an authentication request, and the IP address notified from the network device; a service profile generating unit providing an interface for obtaining an IP address from the network access identifier of the user who makes the authentication request; and a service profile distributing unit having a correspondence table between a network prefix and a network device, and determining a distribution destination of a service profile according to the source address of the service profile, which the service profile generating unit converts a network access identifier into an IP address.

The service profile distributing unit of the server accumulates a service profile that is converted into the format that the network device can interpret in a queue for each network device obtained from the source address, extracts the service profile distributed to the network device from the queue corresponding to the network device at the transmission destination when the authentication controlling unit generates an authentication reply message in response to the authentication request message from each network device, and multiplexes a plurality of service profiles in the message.

Additionally, the network device comprises an attendant unit permitting a network access of a user who makes an authentication request, and IP address assignment by exchanging authentication request and reply messages with the authentication controlling unit of the server, and a service controlling unit dividing and managing multiplexed service control information that is notified from the server in units of users.

The service profile distributing unit of the server possesses a queue for a different domain, and accumulates a profile in a queue for each domain when the authentication request is made from the different domain.

The authentication controlling unit extracts the service control information to be distributed to the network device from the queue corresponding to the domain that makes the authentication request when generating an authentication reply message in response to the authentication request message, and transmits the extracted information as the authentication reply message.

The server at the authentication request source extracts the service profile that is notified with the authentication reply message, and accumulates the extracted profile in a queue for the network device in the domain under the control of the server at the authentication request source.

Additionally, the network device comprises an attendant that autonomously transmits a service request message to the server if the authentication request from the client is not made for a predetermined time period, and downloads the service control information about the network device itself with the service reply message.

Furthermore, in the service control network, service profiles are classified into static and dynamic control information. The static control information is applied immediately after an authentication is terminated, whereas the dynamic control information is applied at the timing when a packet is transmitted.

Still further, the network device registers an assignable IP address to a static packet filter that filters a packet by referencing a source IP address, and registers packet discarding as an action of a packet filter entry, so that the above described service controlling system is efficiently implemented.

Still further, the network device effectively uses hardware resources by replacing the action with the service profile that is returned with an authentication reply message from the server and corresponds to the address assigned to a client, specifically, QoS information customized for each client, when the authentication operation for the host is executed.

Still further, if a source IP address of a packet mismatches a packet filter which filters the packet by referencing the source IP address, the network device checks whether or not the source IP address of the packet is being assigned, in order to efficiently implement the above described dynamic service controlling system. If the source address is being assigned, the network device registers the service control information distributed from the server to the packet filter, and a policy table.

If the source address is not being assigned, the network device registers service control information specifying packet discarding to the packet filter, and the policy table.

Still further, the network device comprises an access monitoring unit logging a packet that passes through the packet filter to which the service profile specifying packet discarding is registered, and issuing warning if a predetermined number or more of accesses are made.

Still further, in the service control network, a service profile is further classified into fundamental service information that distributes QoS in the upstream and downstream directions of a user, and extended service information that can individually distribute the destination address in the upstream direction and the source address in the downstream direction, and the extended service information which consumes more of hardware resources can be reflected on accounting, etc.

Still further, in the service control network, service control information in the downstream direction is put on a hop-by-hop option of the IPv6, and notified to a target network device in order to prevent the service control information that does not specify a particular address from being distributed to all of network devices under the control of the server.

Still further, the network device edits a traffic class field when a packet is transferred, and sets a control code, which sets and inserts a service profile in the downstream direction in a hop-by-hop option of the IPv6, in the action of a static or a dynamic packet filter entry. If a packet including this option, it is set in the dynamic packet filter.

Still further, the service control network according to this preferred embodiment assumes to include an IPv6 network. The service control network according to this preferred embodiment comprises an AAA (Authentication, Authorization, and Accounting) server authenticating a terminal, a network device (for example, implemented by an IPv6 router and also called an edge node (EN)) as a communications node configuring an IPv6 network, an access network connecting the IPv6 network and the terminal, and an IPv6 host as the terminal.

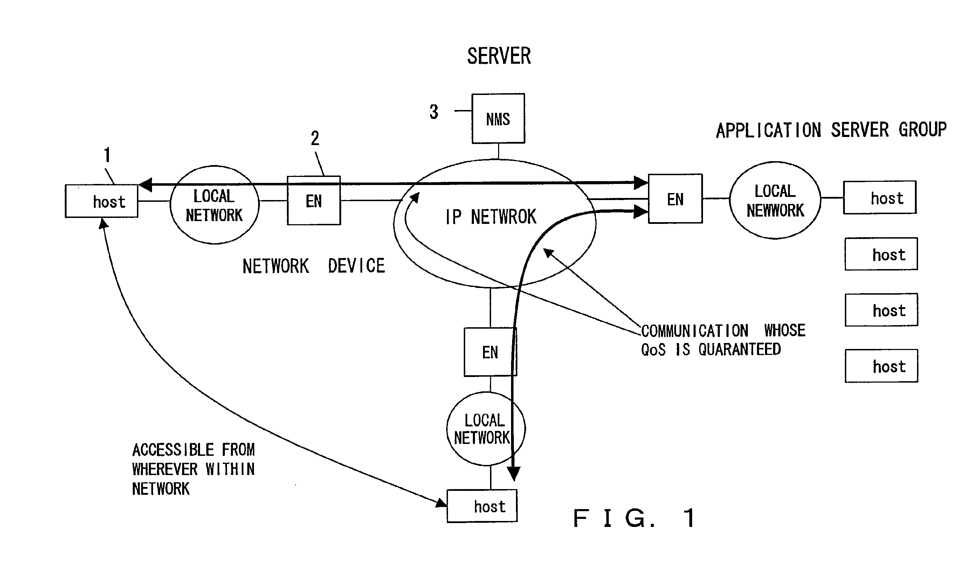

Fig. 1 shows the configuration of a service control network for explaining the principle of the present invention.

In this figure, the service control network comprises a network device 2 that makes a communication the QoS of which is guaranteed, and is connected to an IP network, a server 3 that manages the network device 2 via the IP network, and a host 1 that communicates with the network device 2 via a local network.

Such a configuration is adopted, whereby a user who freely moves on the network can receive the same network service in all cases from wherever of the network the user makes an access.

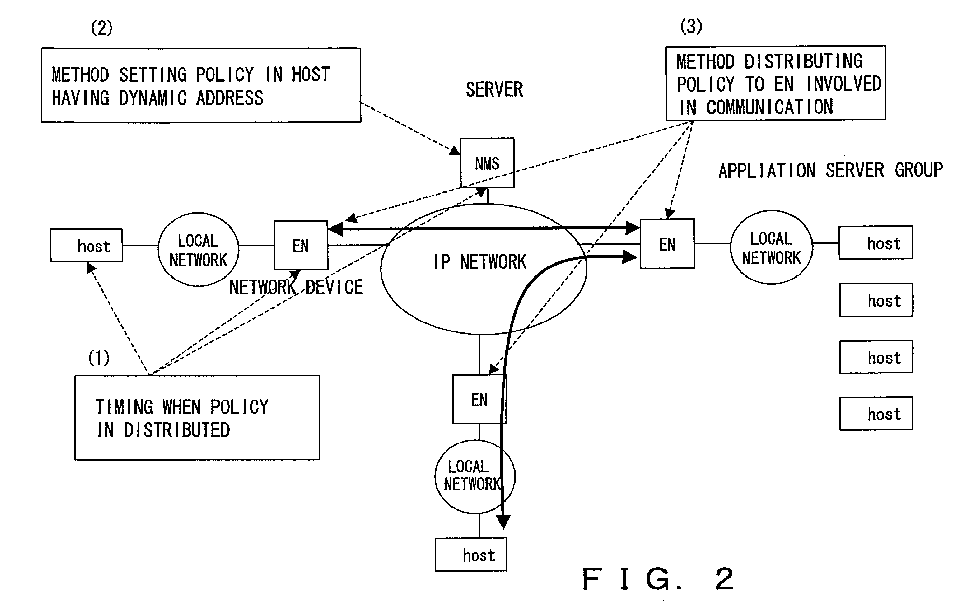

Fig. 2 shows the problems to be solved for implementing the service control network according to the present invention.

To implement the service control network shown in Fig. 1, the following three problems shown in Fig. 2 must be solved.

Namely, the three methods such as (1) the timing when service control information (a policy or a service profile) is distributed to a network appliance, (2) a method setting a policy in a host having a dynamic address, and (3) a method distributing a policy to an edge node (EN) that is involved in a communication.

Their solutions are summarized below.

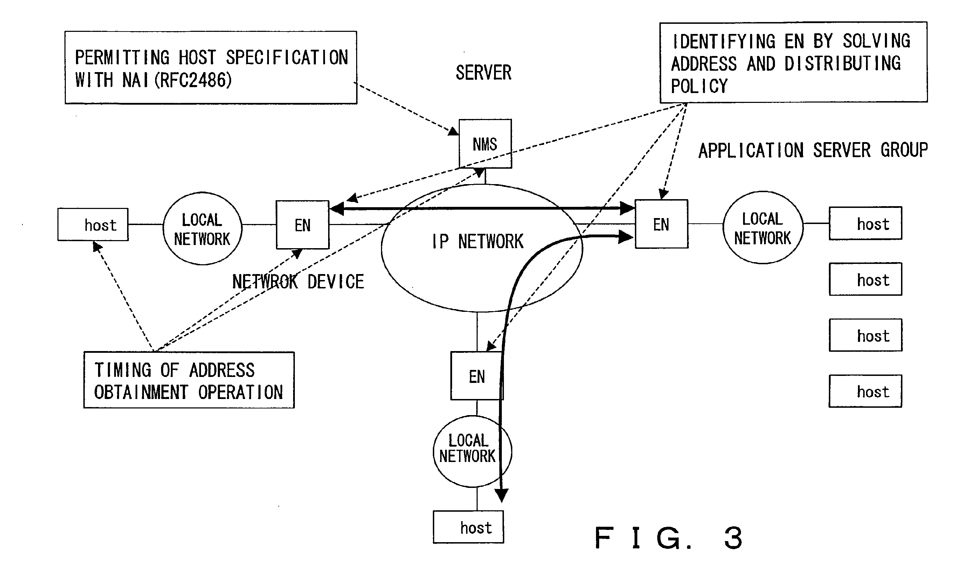

Fig. 3 shows a solution to the problems, which uses a technique B of the present invention.

For (1), the position registration operation of Mobile IP is used as the timing in Japanese Patent Publication No. 2001-169341. An automatic address configuration operation is used as the timing not only in a technique A of the present invention, but also in the technique B of the present invention.

For (2), the technique A of the present invention proposes a method using an NAI (Network Access identifier) stipulated by the RFC (Request For Comments) 2486 as the identifier of a host instead of its IP address. Similarly, the technique B of the present invention uses an NAI.

For (3), Japanese Patent Publication No. 2001-169341 identifies an EN that is involved in a communication, and distributes a policy by using a mobile agent involved in the position registration operation of the Mobile IP, and a path optimization operation performed when a data packet is transmitted/received. With the technique A of the present invention, an EN requests an EN that accommodates a communication destination host to solve an NAI and to distribute a service profile upon receipt of a data packet, so that a policy is distributed to the EN involved in the communication. With the technique B of the present invention, a server (NMS) converts a service profile written with the NAI of a user who requests an address into a policy written with an IP address by performing an authentication operation which cooperates with the automatic address configuration operation, and directly distributes the policy to the network device which is referenced according to the IP address. This portion is a process method unique to the technique B of the present invention, and is different from the technique A of the present invention. Details of the differences between the techniques A and B of the present invention will be described later.

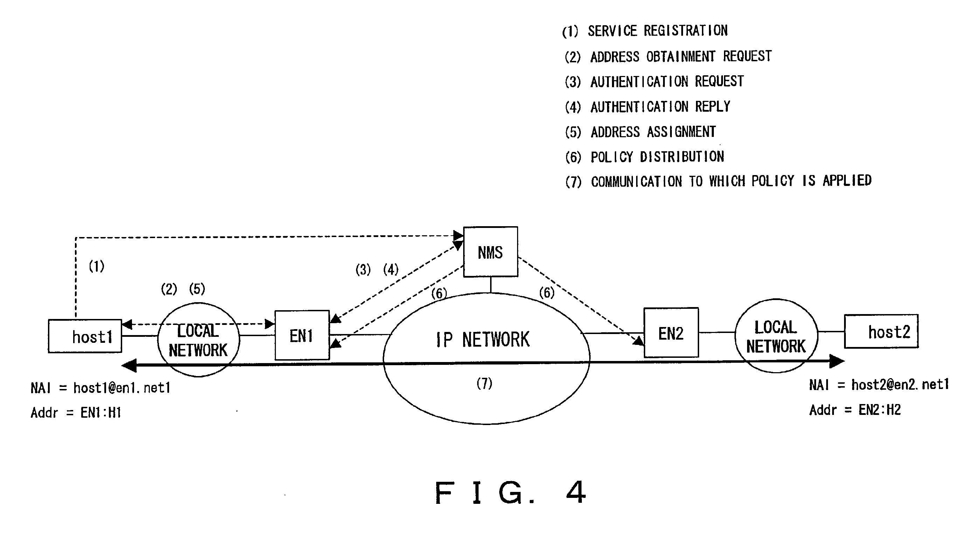

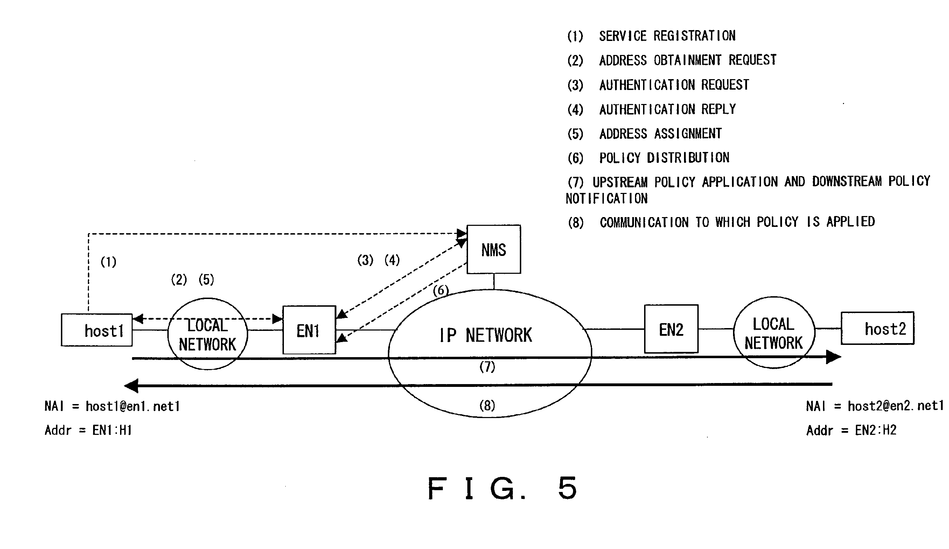

The fundamental operations of the technique B of the present invention include static service control information setting (shown in Fig. 4), and dynamic service control information setting (shown in Fig. 5). Note that a policy and a service profile are hereinafter used as synonyms.

The principle of the static service control information setting is first described with reference to Fig. 4. (1) A user registers a service to a database managed by a server (NMS) with NAI specification from a terminal (a host 1) that the user uses for a communication. (2) The host (host 1) performs the automatic address configuration operation at the timing when a link is established between the host 1 and the network. (3) A network device (EN1) that receives an address assignment request assigns a requested address, and makes an authentication request to the server (NMS) in order to judge whether or not to permit the host 1 to connect to a network. (4) The server (NMS) that receives the authentication request authenticates the host 1, and searches a service profile database according to the NAI set in the authentication request message. Then, the server (NMS) generates a service profile, in which the portion written with the NAI of the extracted service profile is converted into an IP address, by referencing the address cache that the server (NMS) itself manages, and returns an authentication reply message. (5) The network device (EN1) that receives the authentication reply message sets a packet filter so that the assigned address can be used, if the authentication is successfully made, and returns a reply message in response to the address assignment request message. (6) The server (NMS) identifies network devices (EN1 and EN2) to which the service profile is to be distributed by referencing the source address in the condition portion of the service profile, and distributes the service profile. (The service profile is distributed to the network devices (EN1 and EN2) with an authentication reply message or a service reply message. (7) Since the service profile of the host (host 2) with which a communication can be made on the network is already set on the network at this stage, the host (host 1) can make a communication with the quality that the user desires with the host (host 2) that the user registers.

The method statically setting a service is a portion that is the basis of the technique B of the present invention, and an effect can be expected in the optimization of a service profile distribution in a communication which specifies a particular service quality only for a particular application server.

In the meantime, if the same service quality is desired for all of communications which do not specify a particular communication partner, a service profile must be eventually distributed all of ENs with the static service setting method, and the advantage of Japanese Patent Publication No. 2001-169341, which distributes a policy only to a network appliance involved in a communication, is lost.

Fig. 5 shows a method implementing service control for such a communication with a means different from the technique A of the present invention, and is the second principal point of the technique B of the present invention.

The principle of the dynamic service control information setting is described with reference to Fig. 5. (1) to (5) are the same as those described with reference to Fig. 4. (6) The server (NMS) identifies the network device (EN1) to which a service profile is to be distributed by referencing the source address in the condition portion of the service profile, and distributes the service profile. Since a communication partner is not identified in the case of this example, the service profile is distributed only to the network device (EN1) that can be identified according to the source address. (7) When the host (host 1) transmits a data packet to the host (host 2), the network device (EN1) performs marking or queue control according to the service profile distributed in (6). Then, the network device (EN1) adds a hop-by-hop option in which service profile information applied to the downstream direction is set to the data packet to be transmitted to the network device (EN2). Upon receipt of the data packet to which the hop-by-hop option is added, the network device (EN2) sets the information set in the hop-by-hop option in a filter, and prepares for a succeeding communication from the host. (8) When the host (host 2) transmits the data packet to the host (host 1), the network device (EN2) performs marking or queue control according to the filter set in (7), and transfers the data packet to the network device (EN1).

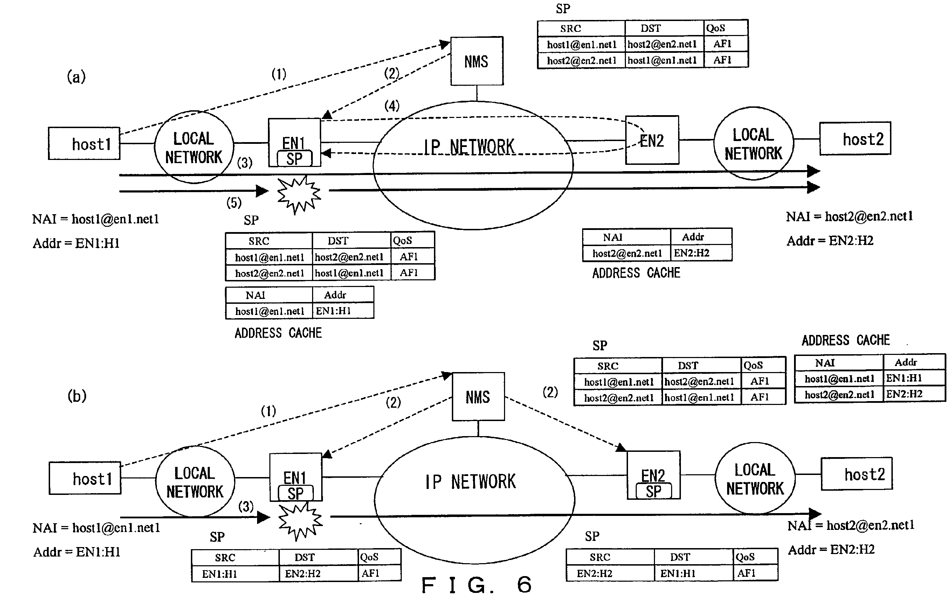

The differences between the techniques A and B of the present invention are described with reference to Figs. 6 to 9.

Fig. 6 shows the process for applying a service profile from when the host (host 1) is connected to the network till when the host 1 transmits a data packet to the host (host 2) in the case where the host (host 1) makes a service setting for applying a Diffserve AF1 class to a bidirectional communication with the host (host 2). (a) in Fig. 6 shows the process of the technique A, whereas (b) in Fig. 6 shows the process of the technique B.

Here, assume that the host (host 2) is already connected to the network, and has been authenticated by the server (NMS) before the host (host 1) is connected to the network.

The process of the technique A of the present invention is first explained. (1) The host (host 1) makes an authentication request to the server (NMS). (2) The server (NMS) notifies the network device (EN1) of a bidirectional profile of the host (host 1) in the form of an NAI unchanged (The SP (service profile) represented close to the NMS (server) is transmitted as the SP of the EN1 (network device) . (3) Upon receipt of the data packet, the network device (EN1) examines whether or not the service profile is active. Because the service profile is not active if the IP address corresponding to the NAI of the host 2 is not learned, the network device (EN1) transfers the data packet to the IP network unchanged. (4) If the service profile is not active, the network device (EN1) requests the network device (EN2) that accommodates the transmission destination host of the data packet to solve the NAI and to distribute the service profile. This is because only the node that assigns the address, namely, the EN2 in this case, manages the address cache for storing the information which makes a correspondence between an NAI and an IP address. In this example, the service profile of the host (host 2) does not exist because the host 2 does not register no service to the network device (EN1) registers no service to the host under the control of the network device (EN1), and the NAI corresponding to the IP address of the host (host 2) is returned from the address cache shown below the network device (EN2) to the network device (EN1). As a result, the IP address corresponding to the NAI of the host (host 2) is solved, so that the service profile in the upstream direction from the host (host 1) to the host (host 2) is activated. (5) The service profile is applied to a succeeding data packet from the host (host 1) to the host (host 2). Namely, the succeeding data packet the QoS of which is AF1 is transmitted from the host (host 1) to the host (host 2).

Next, the process of the technique B of the present invention is described. (1) The host (host 1) makes an authentication request to the server (NMS). (2) The server (NMS) converts the service profile of the host (host 1) from an NAI format into an IP address format, and distributes the service profile to the network device which is obtained from the network prefix of the source address. Specifically, the service profile in the upstream direction from the host (host 1) to the host (host 2) is distributed to the network device (EN1), whereas the service profile in the downstream direction from the host (host 2) to the host (host 1) is distributed to the network device (EN2). Unlike the technique A of the present invention, also the server (NMS) comprises an address cache in the technique B of the present invention. Therefore, an NAI can be converted into an IP address without performing an address solution operation. Because these distributed service profiles satisfy the prerequisite of activation, they are activated immediately upon receipt. (3) The service profiles are applied to a data packet from the host (host 1) to the host (host 2).

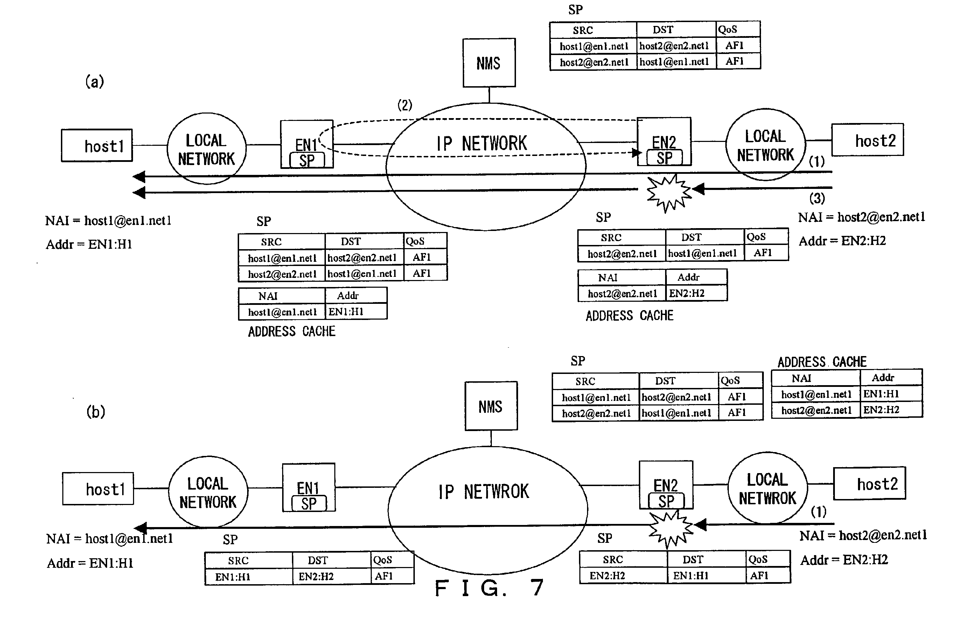

Fig. 7 shows the process for applying a service profile when the host (host 2) transmits a data packet to the host (host 1) under the same condition as that in Fig. 6. (a) in Fig. 7 shows the process of the technique A, whereas (b) in Fig. 7 shows the process of the technique B.

The process of the technique A of the present invention is first described. (1) Upon receipt of the data packet from the host (host 2), the network device (EN2) examines whether or not the service profile is active. Since the service profile is not active at this stage, the network device (EN2) transfers the data packet unchanged. (2) If the service profile is not active, the network device (EN2) requests the network device which accommodates the host at the transmission destination of the data packet to solve the NAI and to distribute a service profile. In this example, the host (host 1) registers a service to the host (host 2). Therefore, the service profile in the downstream direction from the host (host 2) to the host (host 1), and the NAI corresponding to the IP address of the host (host 1) are returned to the network device (EN2). The IP address corresponding to the NAI of the notified service profile is solved, so that the service profile in the downstream direction from the host (host 2) to the host (host 1) can be activated. As a result, the service profile is activated. (3) The service profile is applied to a succeeding data packet from the host (host 2) to the host (host 1).

The process of the technique B of the present invention is described. (1) Since the service profile from the host (host 2) to the host (host 1) is already active, the service profile is applied to a data packet.

The differences between the techniques A and B of the present invention were described above. As is known from Figs. 6 and 7, the technique B of the present invention is more simple as a service distribution method than the technique A of the present invention, and an effect of reducing the processing load of a network device (EN) can be expected. Additionally, a service can be applied also to the initially transmitted packet with the technique B of the present invention, although a service cannot be applied to the initially transmitted packet with the technique A of the present invention.

However, the technique A of the present invention is superior in a point of effectively using network resources, since a service profile becomes active only when a communication is made. The technique B of the present invention is inferior in a point of effectively using network resources. This is because a service profile is continuously active while the address term of a user terminal is active, regardless of whether or not a communication is made. However, the technique B requires the generation of access regulation filters if a regulation service of a user who is not authenticated is considered, and these filters are made to cooperate with a filter for applying a service profile, so that the network resources can be effectively used also with the technique B of the present invention.

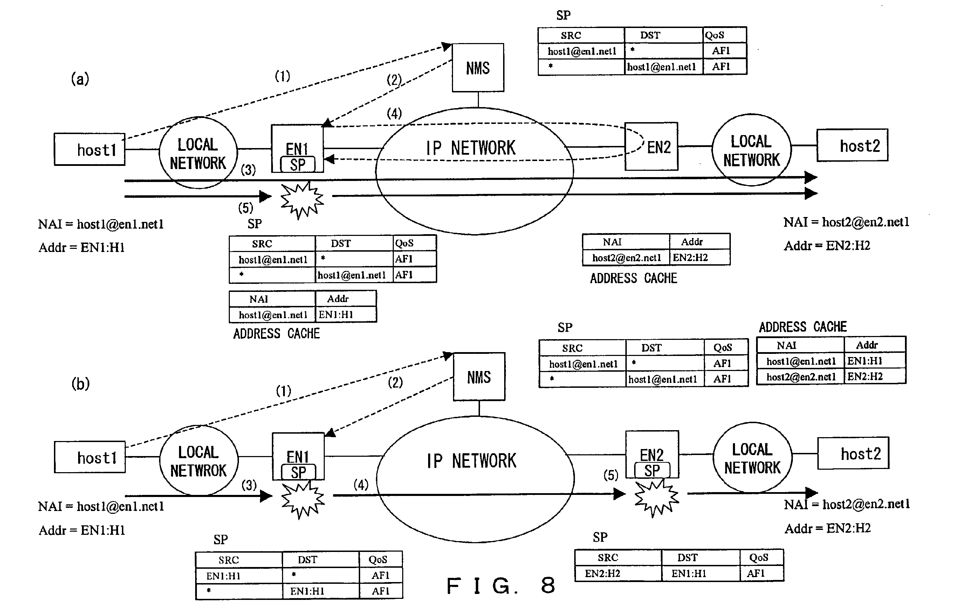

Fig. 8 shows the process for applying a service profile from when the host (host 1) is connected to the network till when the host (host 1) transmits a data packet to the host (host 2) in the case where a service for applying a QoS, such as a Diffserve AF1 class, to all of communications in which the host (host 1) is involved is set. (a) in Fig. 8 shows the process of the technique A, whereas (b) in Fig. 8 shows the process of the technique B.

Here, assume that the host (host 2) is already connected to the network and has been authenticated by the server (NMS), before the host (host1) is connected to the network.

The technique A of the present invention is the same as that in Fig. 6. Since a communication partner is not specified, the activation of a service profile is particularly devised. However, a service profile distribution process is the same. Also this technique B of the present invention can be implemented with the process shown in Fig. 6. As stated earlier, the server (NMS) must distribute a service profile to all of network devices under such settings. Therefore, the advantage of the present invention that a service profile is set only in a network appliance which is involved in a communication is lost.

Here, a dynamic service profile distribution method, which is enabled by solving an address with the server (NMS), is described.

(1) The host (host 1) makes an authentication request to the server (NMS). (2) The server (NMS) converts the service profile of the host (host 1) from an NAI format into an IP address format by using an address cache included in the server (NMS). If a communication partner is indefinite, a bidirectional service profile is distributed to the network device (EN1) that transmits the authentication request. Since the service profile whose communication partner is indefinite is a service filter which conditions only a source address, it can be activated. (3) Upon receipt of a data packet to be routed from the host (host 1) to the host (host 2), the network device (EN1) controls the packet according to the activated service profile, sets and adds the service profile (the SP shown below the EN2 in (b) of Fig. 8), which is applied to the downstream direction to the host (host 1), in a hop-by-hop option within the IP header of the data packet, and transfers the data packet to the network device (EN2). (4) Upon receipt of the hop-by-hop option, the network device (EN2) activates the received service profile. (5) The network device (EN2) excludes the hop-by-hop option, and transfers the data packet to the host (host 2).

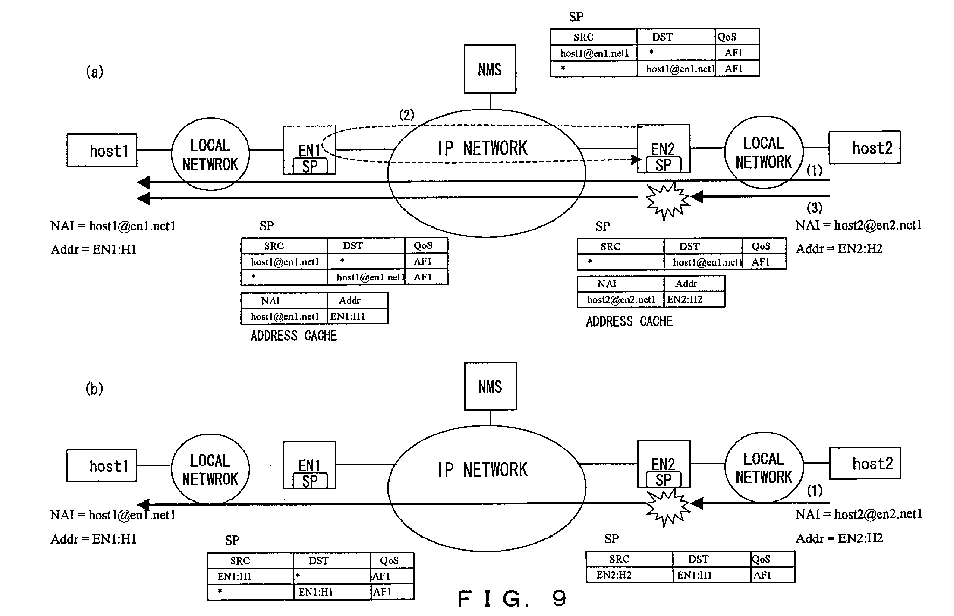

Fig. 9 shows the process performed when the host (host 2) transmits a data packet to the host (host 1) under the same condition as that in Fig. 8. (a) in Fig. 9 shows the process of the technique A, whereas (b) if Fig. 9 shows the process of the technique B. Description of this figure is the same as that of Fig. 7.

The technique B of the present invention devises two setting methods such as static and dynamic service control information setting methods, and recites that they are respectively different from Japanese Patent Publication No. 2001-169341 in an implementation means. These two methods according to the technique B of the present invention are combined, whereby service control considering also the effective use of network resources can be implemented. One example of a provided service is a service such that fundamental service control information of a user is distributed as dynamic service control information, which is then replaced with a discarding policy in an authentication filter of the user, so that the hardware resources of a network device is saved, and a service profile distribution to an unnecessary node is avoided. Additionally, static information is provided as a regulation service for a particular communication destination or an extended service of a user, and, for example, charging can be made to the user according to network resources consumed.

Here, system functions are summarized.

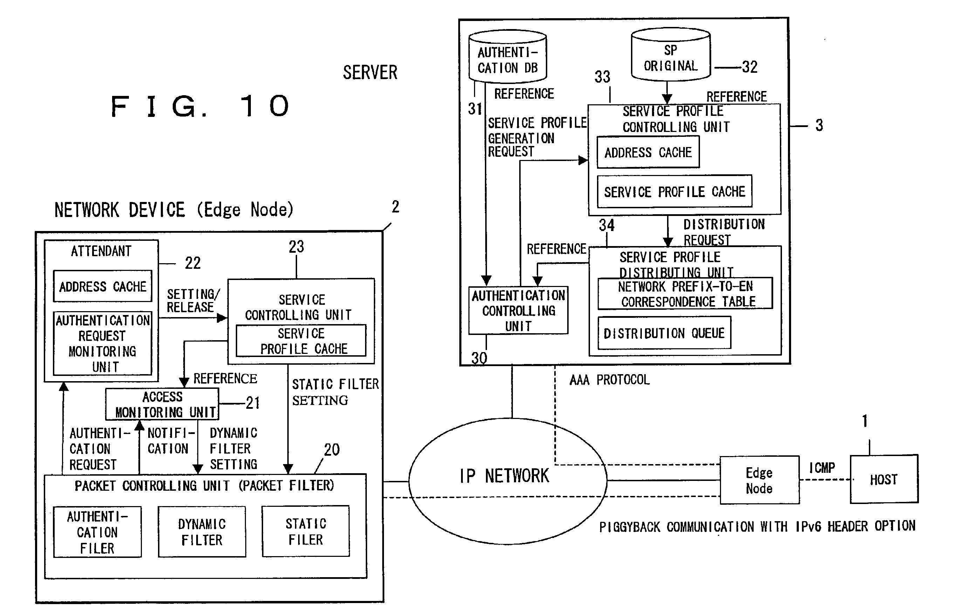

Fig. 10 is a block diagram showing the functions of the technique B of the present invention. The functions are summarized below.

### "ICMP (Internet Control Message Protocol)"

The ICMP is a protocol used for automatic address configuration, and all of messages used for automatic address configuration stipulated in the future are available. For the current IPv6 automatic address configuration protocol, draft-perkins-aaav6-0.3.txt is stipulated as a draft of the IETF (Internet Engineering Task Force).

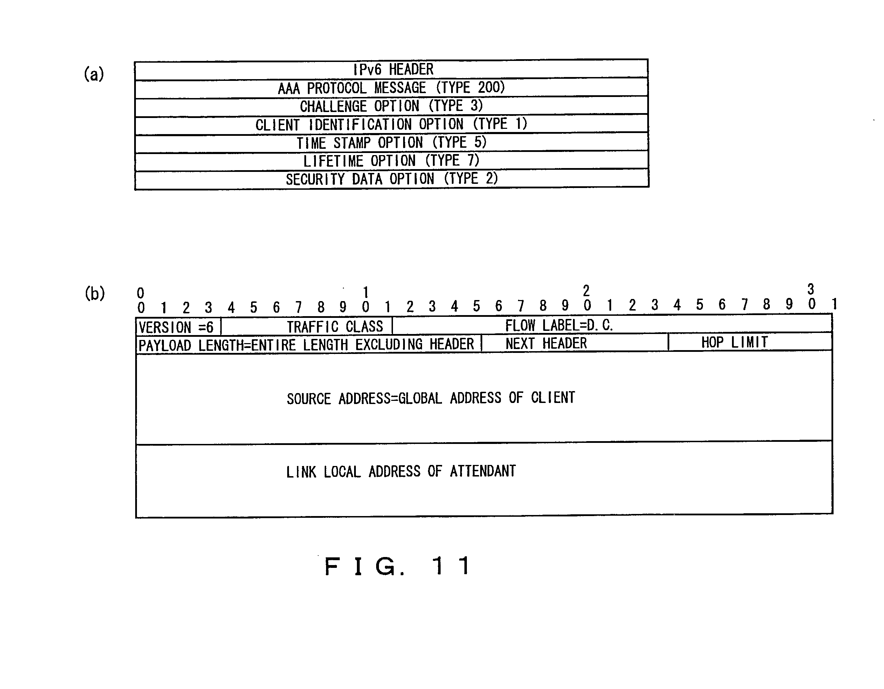

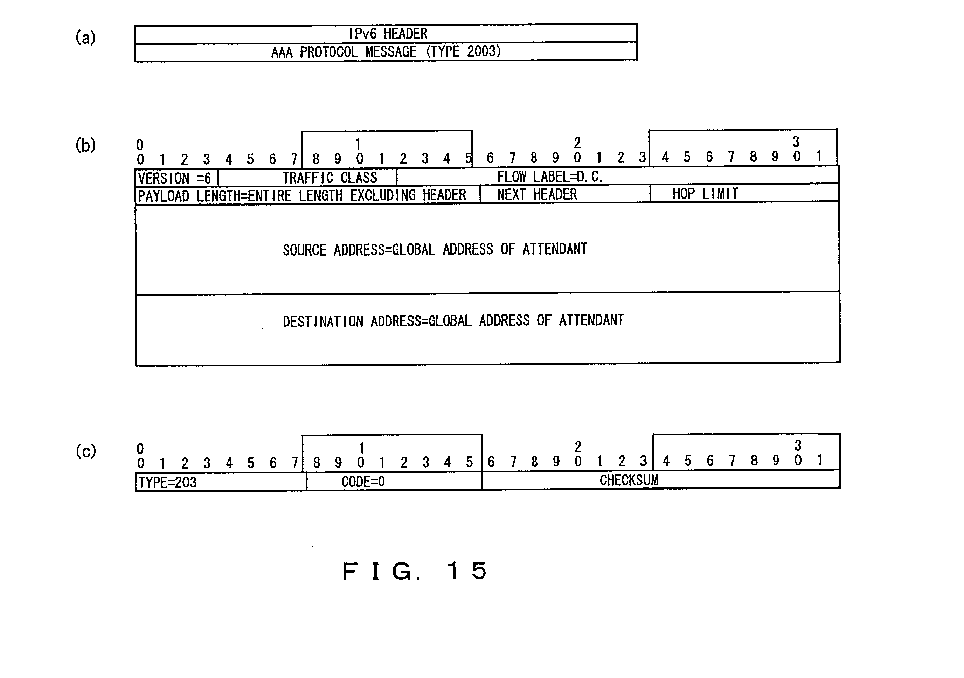

Details of the ICMP protocol are shown in Figs. 11 to 15.

### "AAA protocol"

The AAA protocol is a protocol used by a server. The technique B of the present invention assumes to use the DIAMETER protocol (Japanese Patent Publication No. 2001-169341 refers to the DIAMETER protocol of the previous version), which is currently under study in the IETF, in a preferred embodiment, although the technique B does not specify a protocol used. The AAA protocol can be used as every protocol that can transmit the information about authentication, authorization, accounting, and a policy.

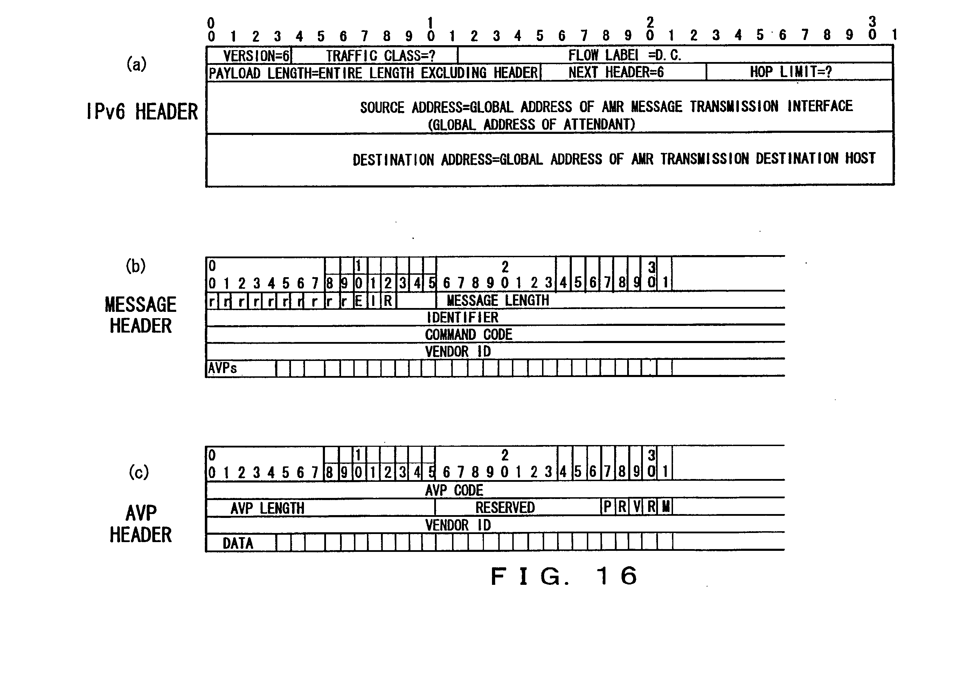

Details of the DIAMETER protocol are shown in Figs. 16 to 22. An AMR (AAA Mobile node Request) and an AMA (AAA Mobile node Answer) respectively correspond to AHR (AAA Client Request) and AHA (AAA Client Answer) messages in the preferred embodiments. draft-perkins-aaav6-0.3.txt does not stipulate the details of the AHR and the AHA messages. The technique B of the present invention describes the AMR and the AMA, which are existing messages, as examples of message configurations for the sake of convenience and explanation.

### "host"

The host 1 is a terminal that makes a communication by using the IP protocol of a PC, a PDA, a cellular phone, etc.

### "network device (edge node: EN)"

The network device 2 is a router that accommodates a host, and generally called an edge node. The network device 2 according to the technique B of the present invention is configured by an attendant 22 that makes the automatic address configuration operation and the authentication operation from the host 1 cooperate with each other, a packet controlling unit performing a transfer control of a received IP packet, a service controlling unit statically setting a service profile notified from the server 3 in the packet controlling unit 20 when authentication is successfully made, and an access monitoring unit 21 dynamically setting a service profile at the timing when a packet is received from the packet controlling unit 20.

### "server"

The server 3 is a device that monitors a network, and automatically sets IP packet control information in the network device 2 under its control according to an operation performed by an operator, or a preset condition. Normally, a policy server or an AAA server that performs authentication, authorization, and accounting corresponds to the server 3. The server 3 according to the technique B of the present invention is configured by an authentication controlling unit 30 authenticating the host 1, an authentication database 31 storing the information for authentication, a service profile (SP) original 32 storing service profile information applied to the host 1, a service profile controlling unit 33 converting a service profile written with an NAI into a service profile written with an IP address, and a service profile distributing unit 34 identifying a network device 2 at a service profile setting destination.

Next, functional entities are described in detail.

### "network device"

The packet controlling unit 20 comprises an authentication filter for identifying a protocol associated with authentication, a dynamic filter that is dynamically set upon receipt of a data packet, and a static filter that is statically set when a host is authenticated.

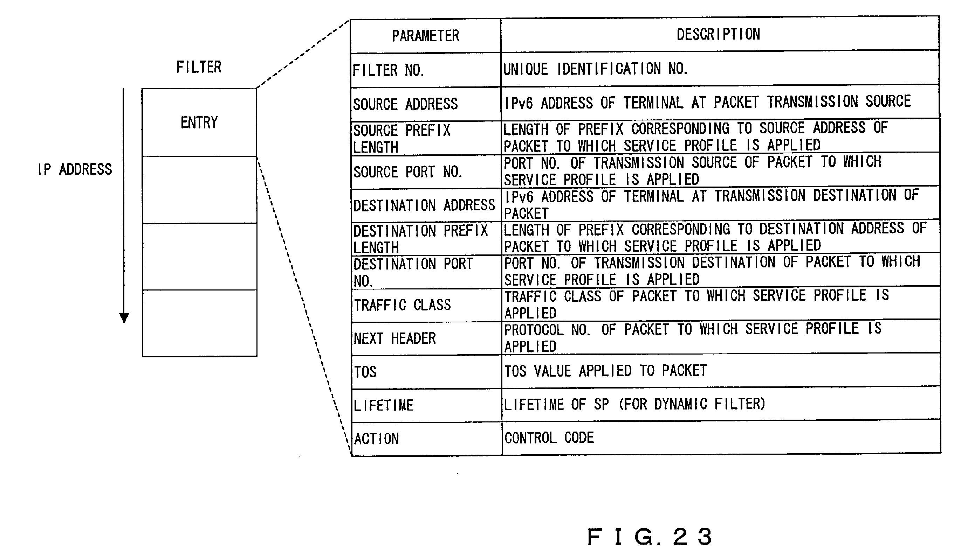

Configuration of a filter is shown in Fig. 23. The filter is configured by a filter number for uniquely identifying a filter when the filter is registered/deleted, a source address, a source prefix length, a source port number, a destination address, a destination prefix length, a destination port number, a traffic class, which are conditions for identifying a packet to be controlled, a TOS (Type Of Service) value being the control information of a packet, a lifetime being the valid term of the filter, and an action being the control code specifying a controlling method of a packet.

The access monitoring unit 21 sets an entry of the dynamic filter of the packet controlling unit for a packet notified from the packet controlling unit.

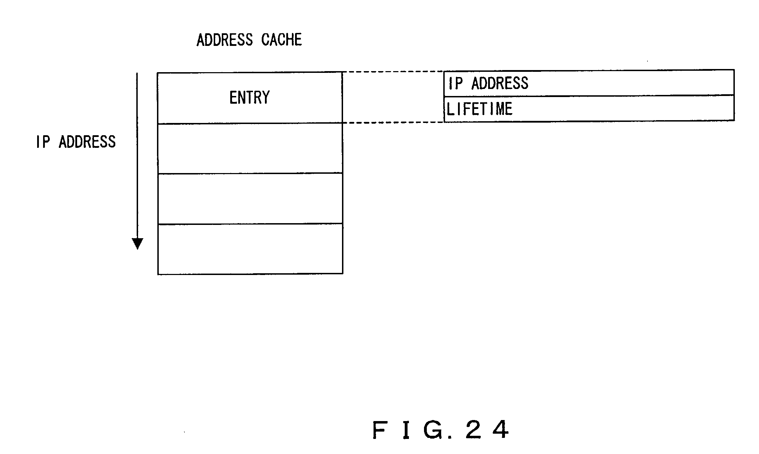

The attendant 22 is configured by an address cache managing the valid term of an assigned IP address (shown in Fig. 24), and an authentication request monitoring unit processing an ICMP message, and an AAA protocol message.

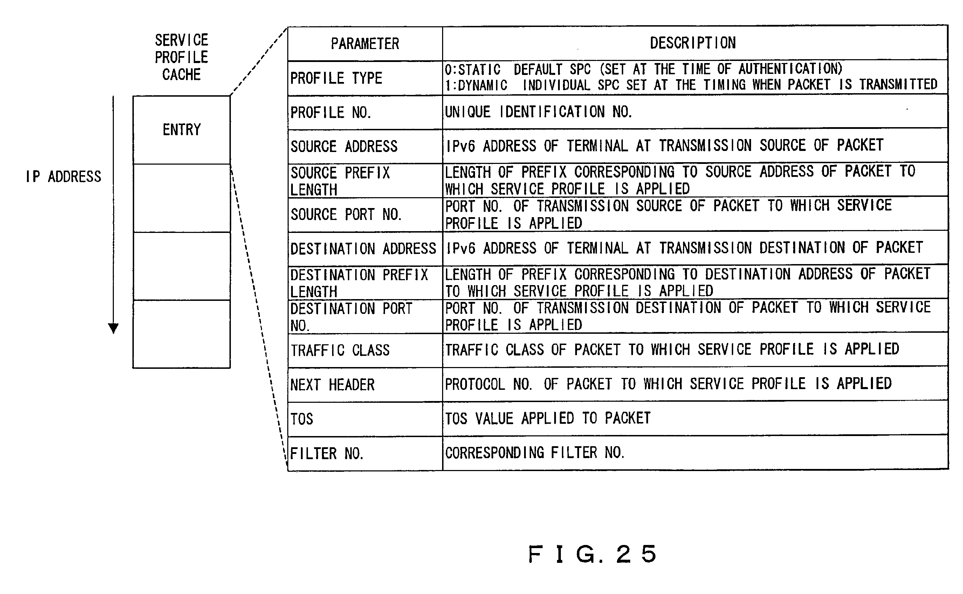

The service controlling unit 23 registers a service profile notified from the server to a service profile cache (shown in Fig. 25), and generates an entry of a static filter. The service profile cache is configured by a profile type indicating whether a service profile setting is either static or dynamic, a profile number being a unique identifier of the service profile, a source address, a source prefix length, a source port number, a destination address, a destination prefix length, a destination port number, a traffic class, which are conditions for identifying a packet to be controlled, and a TOS value being the control information of a packet, and a filter number for indexing a generated filter.

Here, the functions of the present invention are further summarized below.

Namely, the service control network according to the present invention comprises the network device 2 accommodating the host (terminal) 1, and the server 3 authenticating the host 1, and provides a service to the host 1.

The server 3 comprises a service control information database (SP original 32) storing the identification information of the host 1 with a network access identifier.

At the timing of being connected to the host 1, the server 3 makes a correspondence between the network access identifier and an IP address that the network device 2 accommodating the host 1 assigns to the host 1, and distributes to a necessary path service control information where the network access identifier is converted into the IP address.

The network device 2 performs a transfer control of the packet based on the service control information that is distributed from the server 3 as the identification information of the host 1.

The service control network classifies the service control information into static service control information and dynamic service control information. The static service control information is distributed to a necessary path immediately after an authentication operation for authenticating the host 1 is performed, whereas the dynamic service control information is distributed to a necessary path at the timing when a packet is transmitted.

Additionally, the service control network classifies the service profile into fundamental service information that uniformly sets QoS in the upstream and the downstream directions of the host 1, and extended service information that can individually set the destination address in the upstream direction, and the source address in the downstream direction.

Furthermore, the service control network puts the service control information in the downstream direction on a hop-by-hop option of the IPv6, and notifies a target network device 2 so as to prevent service control information which does not specify a particular address from being distributed to all of network devices 2 under the control of the server 3.

The server 3 comprises: the SP original 32 storing the identification information of the host 1 with a network access identifier; the address cache that makes a correspondence between the IP address which the network device 2 accommodating the host 1 assigns to the host 1 and the network access identifier; the service profile controlling unit 33 converting service control information into a format that the network device 2 under the control of the server 3 can interpret for a network control request which specifies the network access identifier; and the service profile distributing unit 34 identifying the distribution destination of the service control information, and distributing the information.

At the timing of being connected to the host 1, the server 3 makes a correspondence between the network access identifier and the IP address that the network device 2 accommodating the host 1 assigns to the host 1, and distributes to a necessary path the service control information whose network access identifier is converted into the IP address.

The server 3 further comprises: the authentication controlling unit 30 detecting a network access from the host 1 based on the execution of an authentication operation for authenticating the host 1, and registering the network access identifier of the host 1 that makes the authentication request, and the IP address notified from the network device 2 to the address cache; and the service profile generating unit providing the authentication controlling unit 30 with an interface for obtaining an IP address from the network access identifier of the host 1 that makes the authentication request.

The service profile distributing unit 34 comprises a correspondence table (a network prefix-to-EN correspondence table) between a network prefix and a network device 2, and determines the distribution destination of a service profile according to the source address of the service profile whose IP address is converted by the service profile generating unit.

In the server 3, the service profile distributing unit 34 accumulates the service profile which is converted into the format that the network device 2 can interpret in a queue for each network device 2 obtained from the source address, extracts the service profile to be distributed to the network device 2 at a transmission destination from the queue corresponding to the network device 2 at the transmission destination, and multiplexes a plurality of service profiles in an authentication reply message, when the authentication controlling unit 30 generates the authentication reply message in response to the authentication request message from the network device 2.

Furthermore, in the server 3, the service profile distributing unit 34 comprises a queue for a different network device 2, accumulates a service profile in a queue for each network device 2 when an authentication request is made from the different network device 2, extracts the service control information to be distributed to the network device 2 from the queue corresponding to the domain that makes the authentication request, and transmits the information as an authentication reply message when the authentication controlling unit 30 generates the authentication reply message in response to the authentication request message. The server 3 at the authentication request source extracts the service profile notified with the authentication reply message, and places the queue of the network device 2 under the control of the server 3 at the authentication request source.

The network device 2 performs a transfer control of the packet based on the service control information that is distributed to the server 3 as the identification information of the host 1.

The network device 2 further comprises: the attendant 22 permitting a network access of a user who makes an authentication request, and IP address assignment by exchanging authentication request and reply messages with the authentication controlling unit 30 which is comprised by the server, detects a network access from the terminal based on the execution of an authentication operation for authenticating the terminal, and registers to an address cache a network access identifier of the terminal that makes the authentication request, and the IP address notified from the network device; and the service controlling unit 23 dividing and managing the multiplexed service control information that is notified from the server 3 in units of hosts.

Additionally, the network device 2 classifies the service control information into static service control information and dynamic service control information. The static service control information is distributed to a necessary path immediately after the authentication operation for authenticating the host 1 is performed, whereas the dynamic control information is distributed to a necessary path at the timing when a packet is transmitted.

Furthermore, the network device 2 registers an assignable IP address to the static packet filter which filters a packet by referencing a source IP address, registers packet discarding to the action of a static packet filter entry, and replaces the action with the service profile which is returned with an authentication reply message from the server 3 and corresponds to the address which is assigned to the host 1, when the operation for authenticating the host 1 is performed.

Still further, if a source IP address of a packet mismatches the static packet filter which filters a packet by referencing an source IP address, the network device 2 determines whether or not the source IP address of the packet is being assigned. If the network device 2 determines that the source IP address is being assigned, it registers the service control information set by the server 3 to the static packet filter and the address cache. If the network device 2 determines that the source IP address is not being assigned, it registers the service control information which specifies packet discarding to the static packet filter and the address cache.

Furthermore, the network device 2 comprises the access monitoring unit 21 logging a packet that passes through the static packet filter to which the service profile specifying packet discarding is registered, and issuing warning if a predetermined number or more of accesses are made.

Still further, the network device 2 comprises the attendant 22 transmitting a service request message to the server 3 if an authentication request from the host 1 is not made for a predetermined time period, and downloading the service control information about the host 1 with a service reply message.

Still further, when the packet is transferred, the network device 2 edits the traffic class field, and sets a control code for setting and inserting a service profile in the upstream direction in a hop-by-hop option of the IPv6 in the action of the dynamic packet filer that is dynamically set when the packet is received or the static packet filter that is statically set when the host 1 is authenticated.

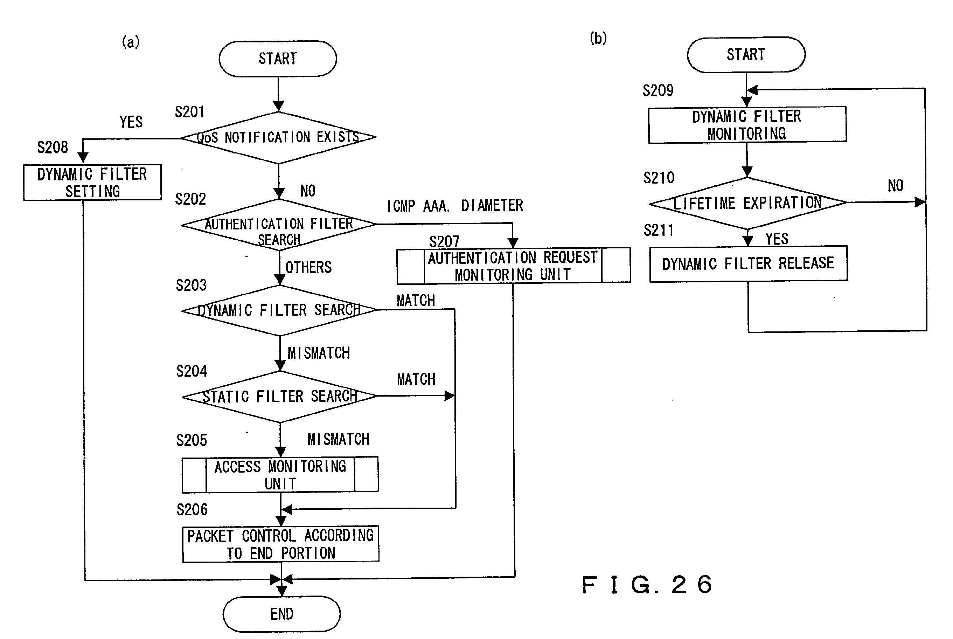

Figs. 26 to 31 show the process flows of the network device 2. The processes performed by the network device 2 are described below by using these flows.

Fig. 26 shows the process flow of the packet controlling unit 20.

steps S201 to S208 (shown in (a) of Fig. 26) are a packet reception process.

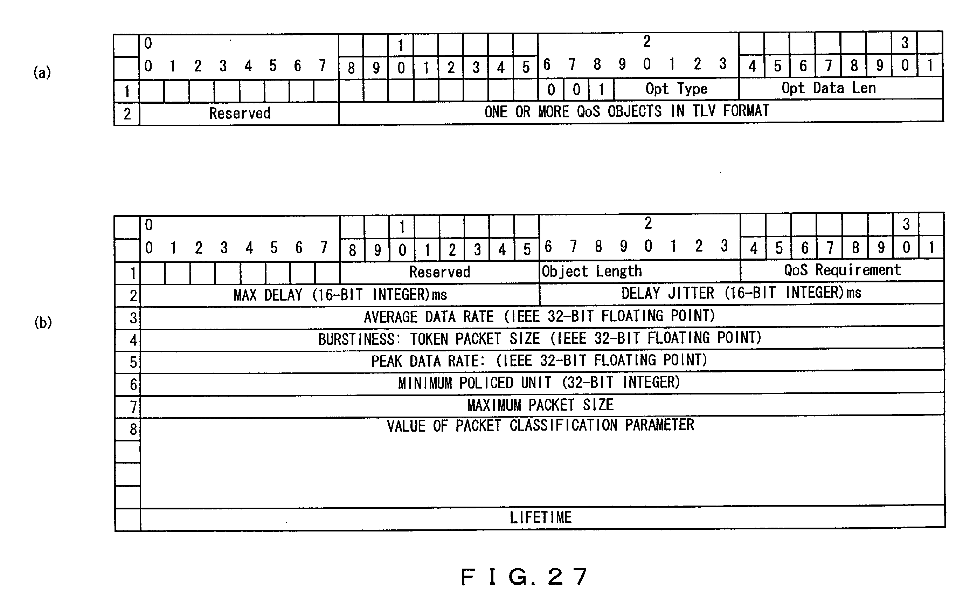

In step S201, upon receipt of an IP packet, the packet controlling unit 20 examines whether or not a QoS object is set in a hop-by-hop option of the IP header. To this IP header option for notification, for example, a QoS object (shown in Fig. 27) that is stipulated by the IETF draft draft-chaskar-mobileip-qos-01.txt can be applied. If there is a QoS notification, the process branches to step S208. If there is no QoS notification, the process proceeds to step S202.

In step S202, the received packet is searched in the authentication filter. If the received packet is an ICMP or an AAA protocol packet, the process branches to step S207. Otherwise, the process proceeds to step S203. The authentication filter is implemented by respectively setting the address of a network device itself as the destination address of the filter, 128 as the destination prefix length, the number of the ICMP protocol as the next header or the number of the DIAMETER protocol as the destination port number, and an application notification in the action.

In step S203, the received packet is searched in the dynamic filter. If the received packet matches a condition portion of the filter, the process branches to step S206. If the received packet does not match any condition portions of the filter, the process proceeds to step S204.

In step S204, the received packet is searched in the static filter. If the received packet matches a condition portion of the filter, the process jumps to step S206. If the received packet does not match any condition portions of the filter, the process proceeds to step S205.

In step S205, if the received packet matches none of the filters, this packet is notified to the access monitoring unit 21.

In step S206, if the received packet matches either of the dynamic and the static filters, or if the dynamic filter entry is generated by the access monitoring unit 21, the packet is controlled according to the control code in the action of the profile. Examples of the control code include packet discarding, application of Diffserve, an addition of a hop-by-hop option, etc.

In step S207, if the received packet is an ICMP or a DIAMETER message, an authentication request event and the packet are notified to the authentication request monitoring unit.

In step S208, if the QoS notification is made with a hop-by-hop option, an entry of the dynamic filter is generated based on the notified information. steps S209 to S211 (shown in (b) of Fig. 26) are a periodical process, which runs independently from the packet reception process.

In step S209, entries of the dynamic filter are periodically monitored, and the lifetime of a filter entry is reduced.

In step S210, if the lifetime expires (the value of the lifetime becomes 0), the process proceeds to step S211. If the lifetime does not expire yet, the process goes back to step S209.

In step S211, the corresponding entry of the dynamic filter is released, and the processes in and after step S209 are repeated.

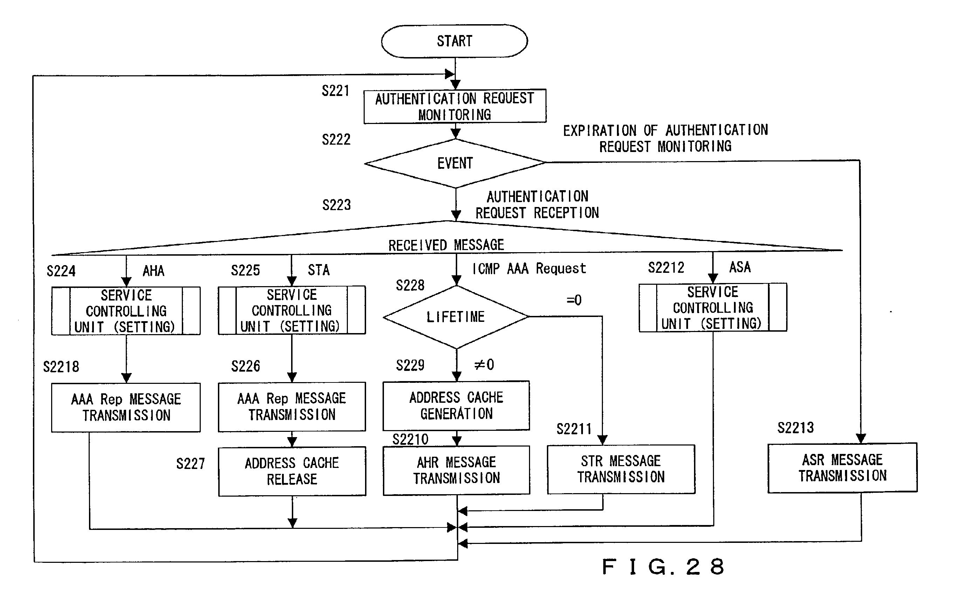

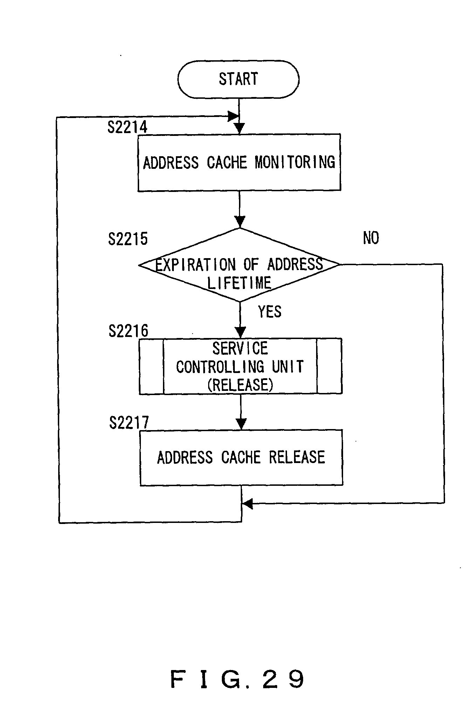

Figs. 28 and 29 show the process flows of the attendant 22. steps S221 to S2213 or S2218 are a process for receiving an ICMP or a DIAMETER message.

In step S221, an event reception timer is set, and an authentication request event from the packet controlling unit 20 is monitored.

In step S222, if the authentication request is received, the process proceeds to step S223. Or, if the event reception timer expires, the process branches to step S2213.

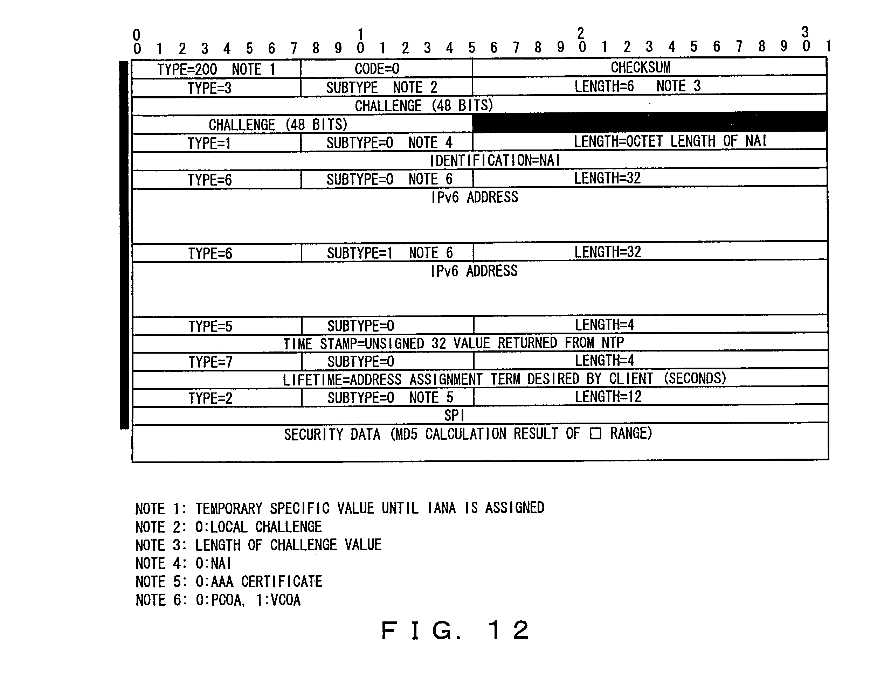

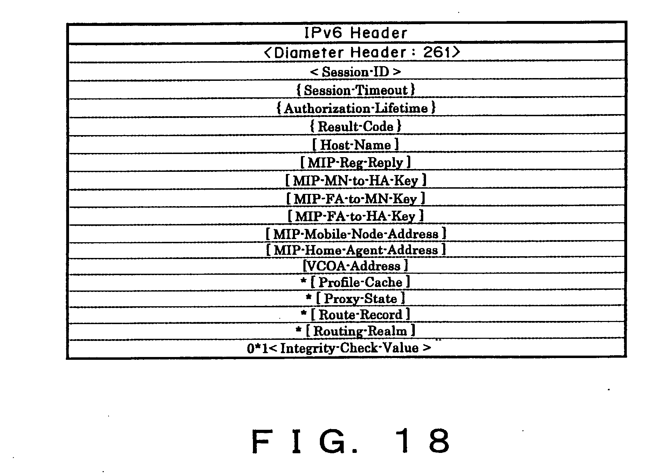

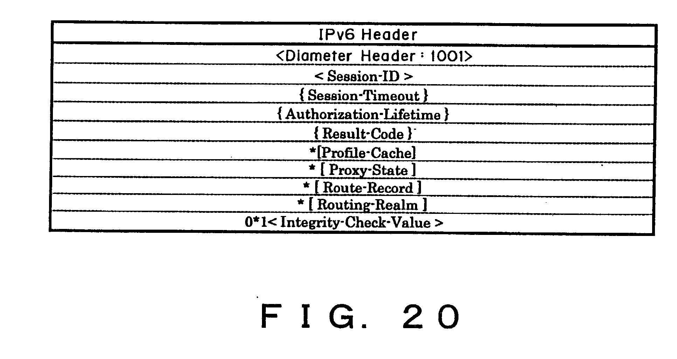

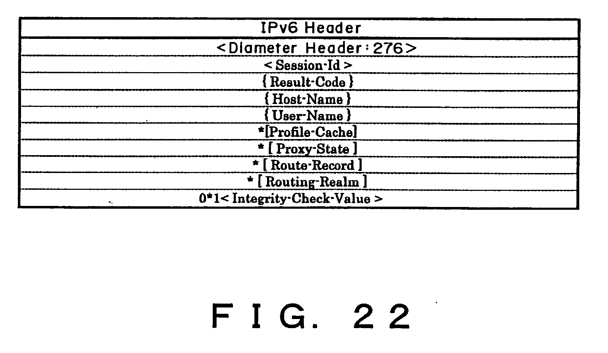

In step S223, the process branches depending on the message type of the packet notified by the event. If the message type is an AHA (shown in Fig. 18), the process proceeds to step S224. If the message type is an STA (Session Termination Answer) (shown in Fig. 22), the process branches to step S225. If the message type is an ICMP AAA Request (shown in Figs. 11 and 12), the process branches to step S228. Or, if the message type is an ASA (AAA Service Answer) (shown in Fig. 20), the process branches to step S2212.

In step S224, a service profile is extracted from the AHA message, and a setting event is notified to the service controlling unit.

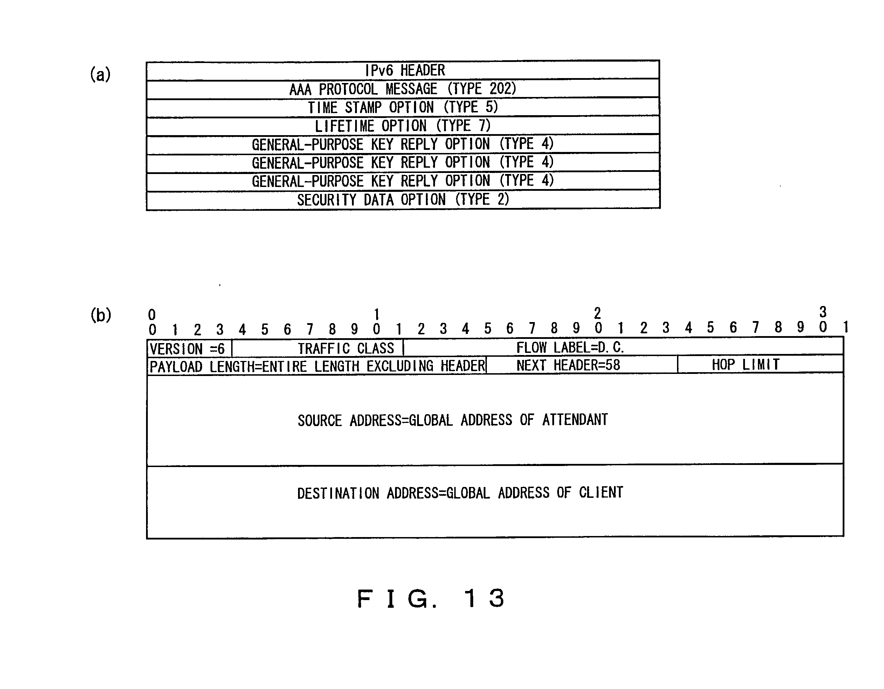

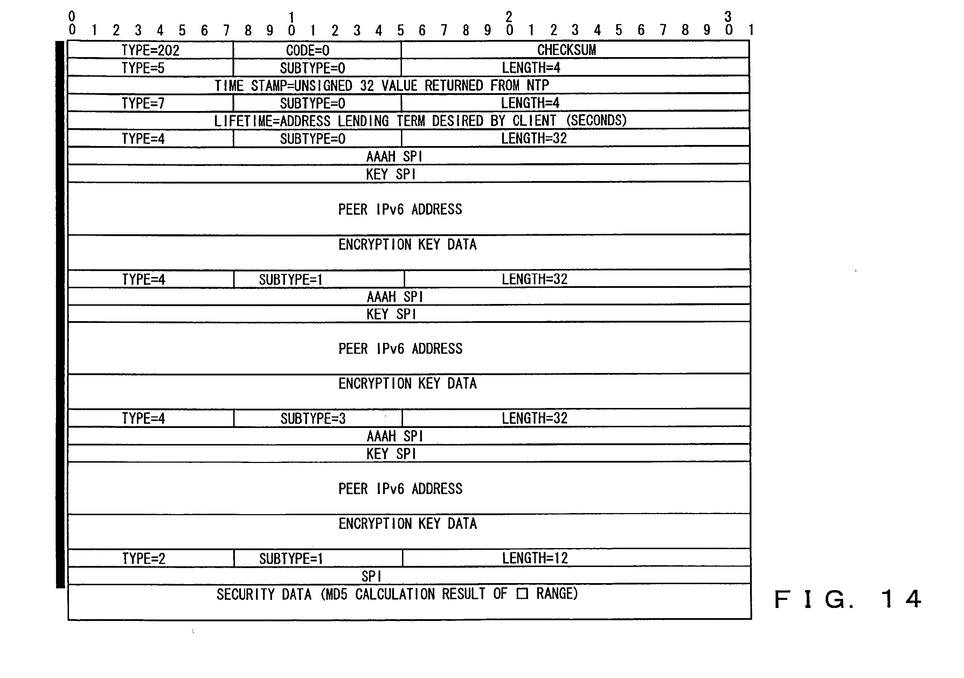

In step S2218, an ICMP AAA Reply message (shown in Figs. 13 and 14) is edited and transmitted to the host 1. The process then goes back to the authentication request monitoring process (step S221).

In step S225, the setting event is notified to the service controlling unit 23.

In step S226, the ICMP AAA Reply message (shown in Figs. 13 and 14) is edited and transmitted to the host 1.

In step S227, the address cache of the host 1 is released.

In step S228, the lifetime option of the ICMP AAA Request message (shown in Figs. 11 and 12) is determined. If the lifetime is 0, the process branches to step S2211. If the lifetime is not 0, the process proceeds to step S229.

In step S229, the address notified with the ICMP AAA Request message, and the lifetime determined by the attendant 22 are set in the address cache in order to validate the address of the host 1 at the transmission source of the ICMP AAA Request message.

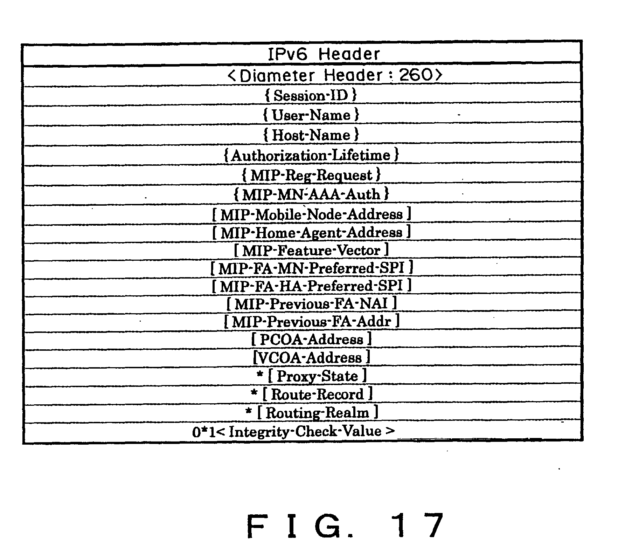

In step S2210, an AHR message (shown in Fig. 17) is transmitted to the server 3, and the process goes back to the authentication request monitoring process (step S221).

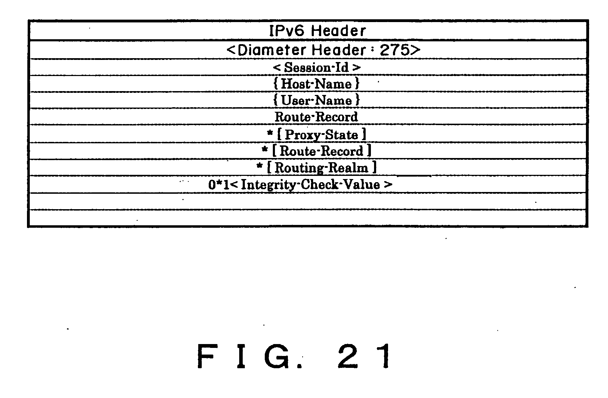

In step S2211, an STR message (shown in Fig. 21) is transmitted to the server 3, and the process goes back to the authentication request monitoring process (step S221).

In step S2212, a service profile is extracted from the ASA message, and a setting event is notified to the service controlling unit 23. Then, the process goes back to the authentication request monitoring process (step S221).

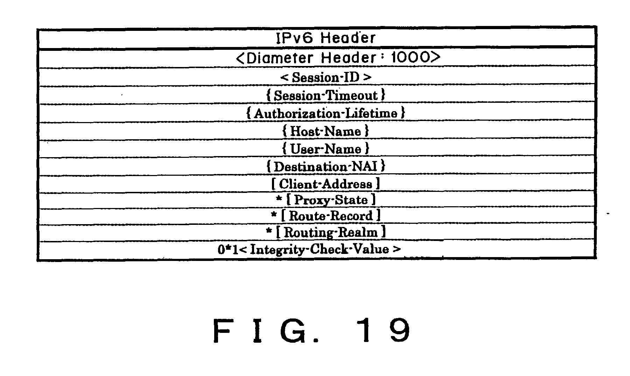

In step S2213, an ASR (AAA Service Request) message (shown in Fig. 19) is transmitted to the server 3, and the process goes back to the authentication request monitoring operation (step S221). steps S2214 to S2217 of Fig. 29 are a periodical process of the attendant 22, which runs independently from the packet reception process.

In step S2214, entries of the address cache are periodically monitored, and the lifetime of an address cache entry is reduced.

In step S2215, if the lifetime expires (the value of the lifetime is 0), the process proceeds to step S2216. If the lifetime does not expire yet, the process goes back to step S2214.

In step S2216, a release event is notified to the service controlling unit 23.

In step S2217, the corresponding entry of the address cache is released, and the processes in and after step S2214 are repeated.

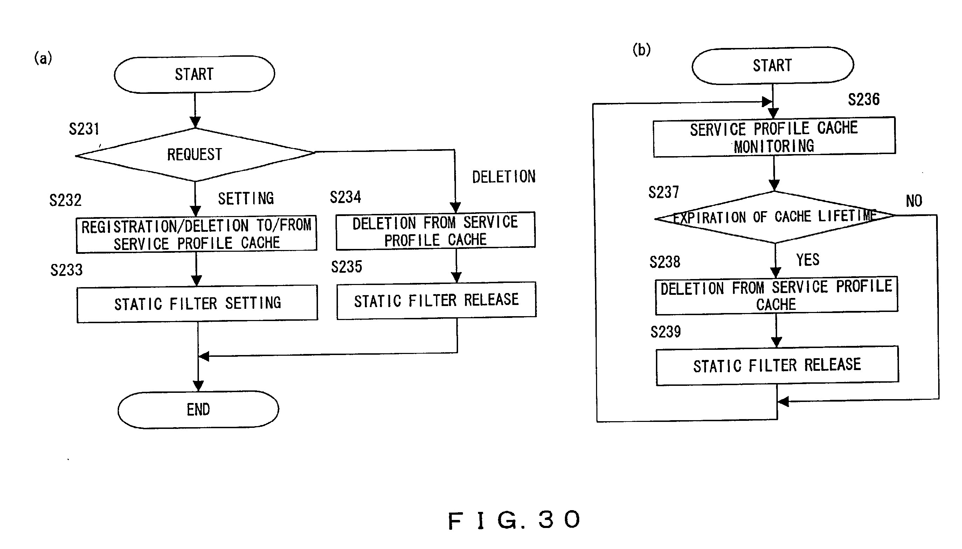

Fig. 30 shows the process flow of the service controlling unit 23. steps S231 to S235 (shown in (a) of Fig. 30) are a filter setting/release process.

In step S231, a request event to the service controlling unit 23 is examined. If the event is "setting", the process proceeds to step S232. If the event is "release", the process branches to step S234.

In step S232, the control code of the service profile notified by the event is "setting", the service profile is registered to the service profile cache. If the control code of the service profile is "release", it is deleted from the service profile cache.

In step S233, the static filter of the packet controlling unit 20 is set/released based on the service profile notified by the event, and the process is terminated.

In step S234, the service profile cache is searched with the IP address notified by the event, and the corresponding service profile is deleted.

In step S235, the corresponding entry of the static filter of the packet controlling unit 20, which is linked to the deleted service profile, is deleted, and the process is terminated.

steps S236 to S239 (shown in (b) of Fig. 30) is a periodical process of the service controlling unit 23, which runs independently from the service profile setting/release process.

In step S236, entries of the service profile cache are periodically monitored, and the lifetime of an address cache entry is reduced.

In step S237, if the lifetime of the service profile cache expires (the value of the lifetime is 0), the process proceeds to step S238. If the lifetime does not expire yet, the process goes back to step S236.

In step S238, the corresponding entry of the service profile cache is deleted.

In step S239, the corresponding entry of the static filter of the packet controlling unit, which is linked to the deleted service profile, is deleted, and the processes in and after step S236 are repeated.

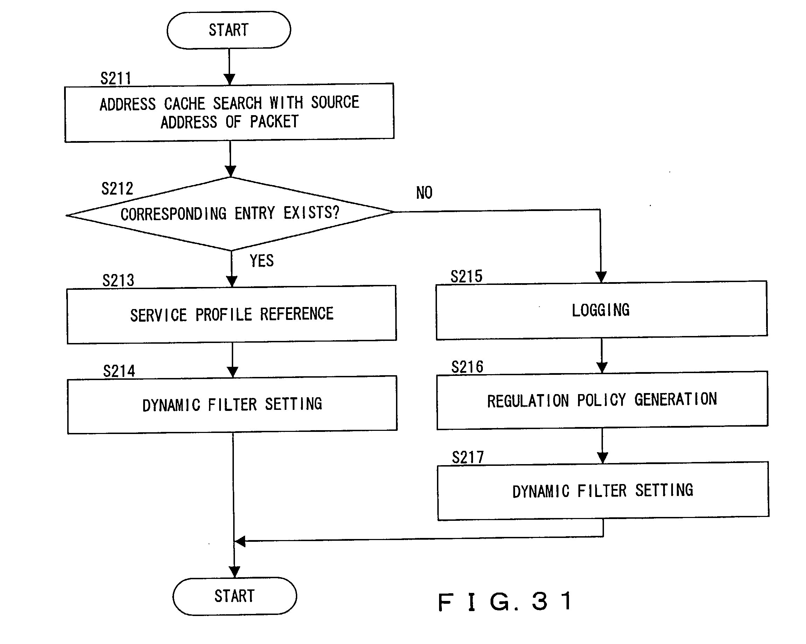

Fig. 31 shows the process flow of the access monitoring unit 21.

In step S211, the address cache managed by the attendant is searched by using the source address of the packet notified from the packet controlling unit 20.

In step S212, if the corresponding entry exists, the process proceeds to step S213. If the corresponding entry does not exist, the process branches to step S215.

In step S213, the service profile cache managed by the service controlling unit 23 is searched with the source address.

In step S214, if the corresponding service profile exists, and if the setting type of the service profile is dynamic, the service profile is set in the dynamic filter of the packet controlling unit 20. If the corresponding service profile does not exist, a dynamic filter in which Best Effort is set is generated.

In step S215, the information of this packet is logged.

In step S216, a policy discarding this packet is generated for this packet. The valid term of the policy is determined by a manager.

In step S217, the policy is set in the dynamic filter of the packet controlling unit 20.

### "server"

The authentication controlling unit 30 authenticates the host 1, performs an AAA protocol process, and generates a service profile to be distributed to the network device for the authenticated host.

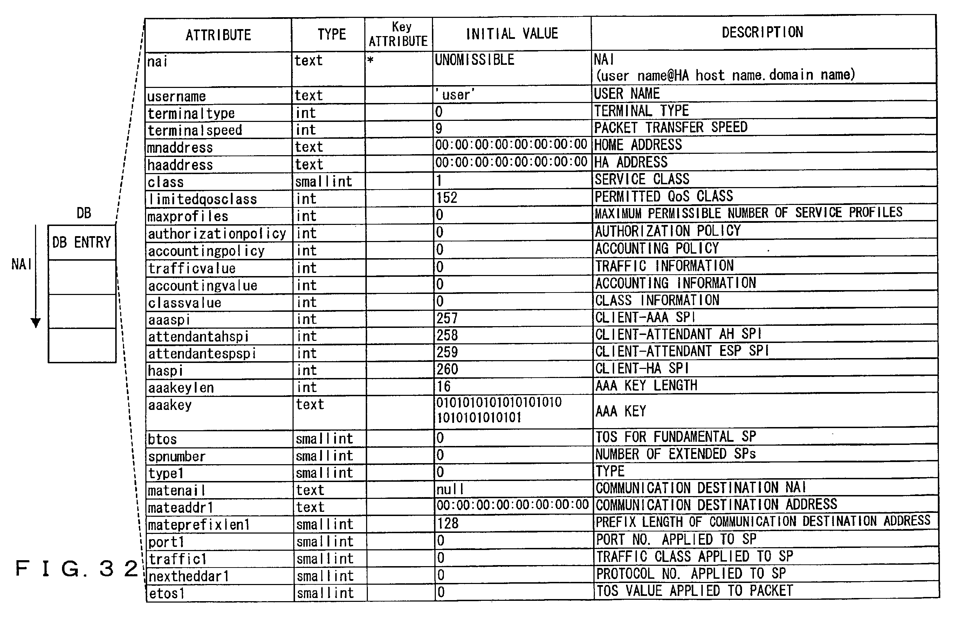

The authentication database 31 and the service profile (SP) original 32 are user information searched with an NAI. Configuration of the authentication database 31 and the SP original 32 is exemplified in Fig. 32. The database is searched by using an NAI as a key, and is configured by general user information such as a user name, a terminal type, etc., policy information for determining whether or not to apply a service profile depending on the state of a network or a service condition, authentication information such as an SPI (Security Parameter Index) for identifying a decryption method of an authentication key or authentication information, or the like, and a service profile for applying a service to a packet, such as the NAI of a communication partner, a port number, etc., which a user desires,

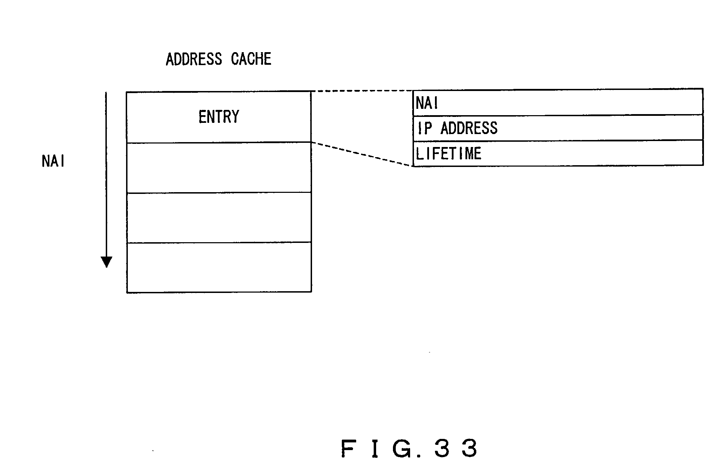

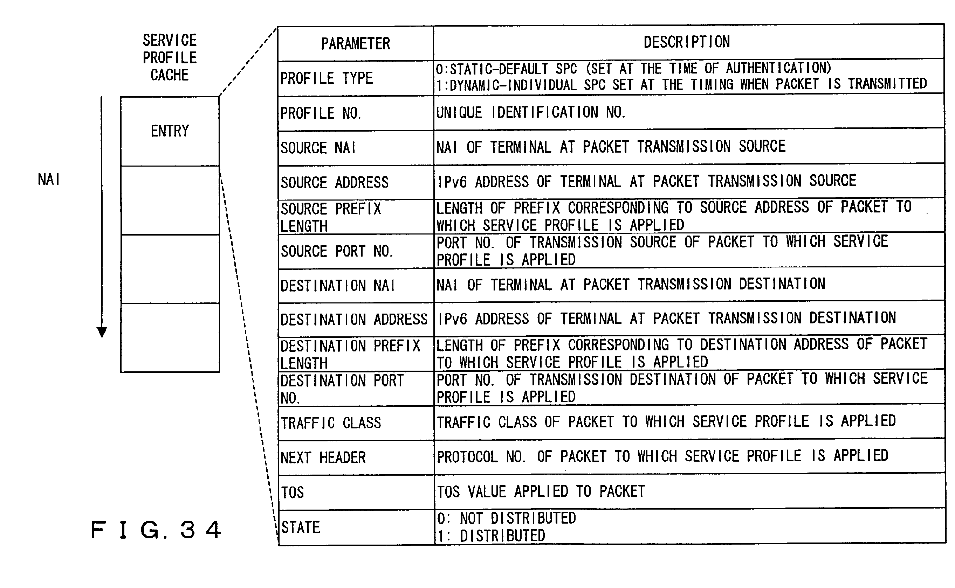

The service profile controlling unit 33 is configured by an address cache and a service profile cache. The address cache (shown in Fig. 33) is configured by an NAI of an authenticated host, an IP address that is assigned to the NAI at the time of authentication, and a lifetime. The service profile cache (shown in Fig. 34) is configure by a profile type indicating whether or not a profile setting is either static or dynamic, a profile number being a unique identifier of the service profile, a source address, a source prefix length, a source port number, a destination address, a destination prefix length, a destination port number, a traffic class, a TOS value being the control information of a packet, and a state indicating whether or not the service profile has been distributed, which are conditions for identifying a packet to be controlled.

The service profile distributing unit 34 is configured by a network prefix-to-EN correspondence table, and a distribution queue. The network prefix-to-EN correspondence table is configured by a network prefix, and an IP address of a network device 2, which corresponds to the network prefix. The distribution queue, which is prepared for each network device 2 under the control of the server 3, is a queue table for queuing a service profile to be distributed to the network device 2.

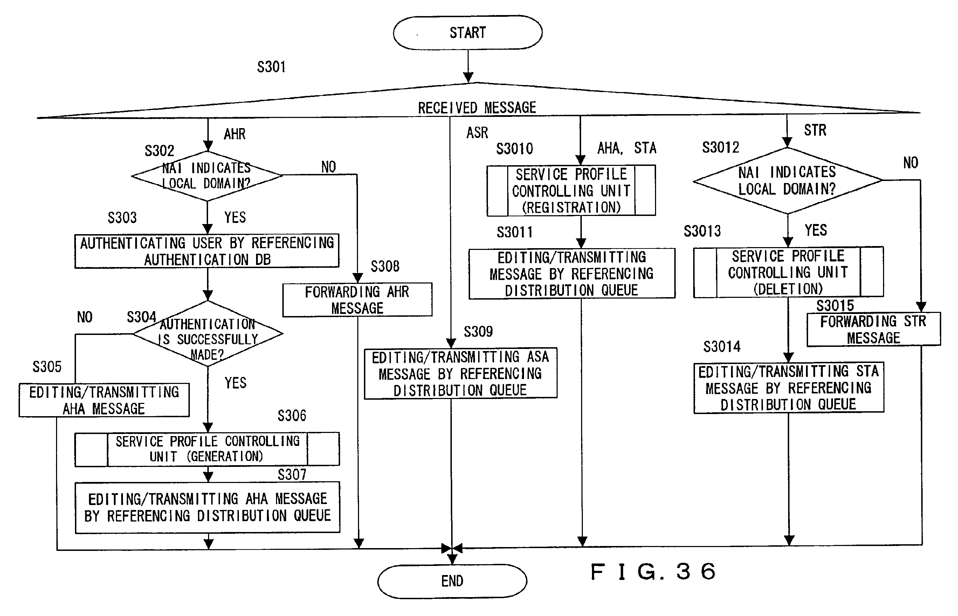

Figs. 36 to 39 show the process flows of the server 3. The processes performed by the server 3 are described below by using these flows.

Fig. 36 shows the process flow of the authentication controlling unit 30.

In step S301, the process branches depending on a received message. If the received message is an AHR (shown in Fig. 17), the process proceeds to step S302. If the received message is an ASR (shown in Fig. 19), the process branches to step S309. If the received message is an AHA (shown in Fig. 18) or an STA (shown in Fig. 22), the process branches to step S3010. If the received message is an STR (shown in Fig. 21), the process branches to step S3012.

In step S302, it is determined whether or not an authenticated user is a user of the local domain by examining the realm portion of the NAI of the host, which is set in User-Name AVP (Attribute Value Pair) of the AHR message (The NAI is written in the format "user name@realm". The "realm" is a portion which indicates a domain, and written, for example, as "abcsya.com"). If the NAI indicates the local domain, the process proceeds to step S303. If the NAI does not indicate the local domain, the process branches to step S308.

In step S303, the authentication database 31 is searched with the NAI, and the host that makes the authentication request is authenticated according to the authentication information extracted from the authentication database 31.

In step S304, if the authentication is successfully made, the process branches to step S306. If the authentication is unsuccessfully made, the process proceeds to step S305.

In step S305, an AHA message (shown in Fig. 20) is edited, and the message is transmitted to the network device 2 at the transmission source of the AHR. The process is then terminated.

In step S306, a generation event is notified to the service profile controlling unit 33.

In step S307, an AHA message (shown in Fig. 18) is edited by referencing the distribution queue corresponding to the network device at the transmission source of the AHR within the service profile distributing unit 34, and the service profile detached from the queue is set in the Profile-Cache AVP. Then, the message is transmitted to the network device 2 at the transmission source of the AHR, and the process is terminated.

In step S308, the AHR message is transferred to the server 3 of the domain indicated by the realm of the NAI.

In step S309, an ASA message (shown in Fig. 20) is edited by referencing the distribution queue corresponding to the network device 2 at the transmission source of the ASR within the service profile distributing unit 34, and a service profile detached from the queue is set in the Profile-Cache AVP. Then, the message is transmitted to the network device 2 at the transmission source of the ASR, and the process is terminated.

In step S3010, a registration event is notified to the service profile controlling unit 33.

In step S3011, an AHA message (shown in Fig. 20) or an STA message (shown in Fig. 22) is edited by referencing the distribution queue corresponding to the network device 2 at the transmission source of the AHR or the STR within the profile distributing unit 34, and a service profile detached from the queue is set in the Profile-Cache AVP. Then, the message is transmitted to the network device 2 at the transmission source of the AHR or the STR, and the process is terminated.

In step S3012, it is determined whether or not an authenticated user is a user of the local domain by examining the realm portion of the NAI of the host, which is set in User-Name AVP of the STR message. If the NAI indicates the local domain, the process proceeds to step S3013. If the NAI does not indicate the local domain, the process branches to step S3015.

In step S3013, a deletion event is notified to the service profile controlling unit 33.

In step S3014, an STA message (shown in Fig. 22) is edited by referencing the distribution queue corresponding to the network device 2 at the transmission source of the STR within the profile distributing unit 34, and a service profile detached from the queue is set in the Profile-Cache AVP. Then, the message is transmitted to the network device 2 at the transmission source of the STR, and the process is terminated.

In step S3015, the STR message is transferred to the server 3 of the domain indicated by the realm of the NAI, and the process is terminated.

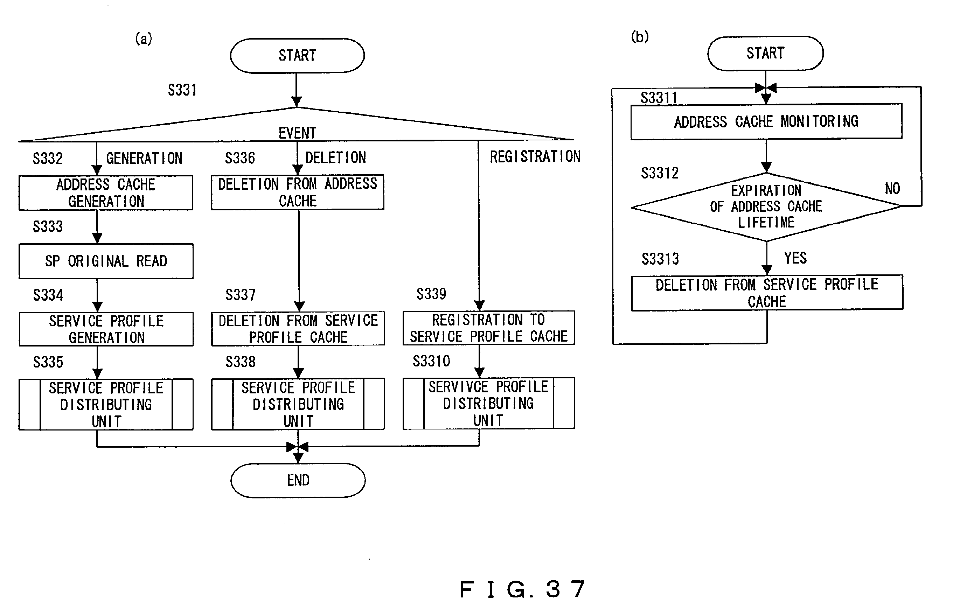

Fig. 37 shows the process flow of the service profile controlling unit 33. steps S331 to S3310 (shown in (a) of Fig. 37) are a control process for an address cache and a service profile.

In step S331, the process branches depending on a received event. If the received event is a generation event, the process proceeds to step S443. If the received event is a deletion event, the process branches to step S336. If the received event is a registration event, the process branches to step S339.

In step S332, an address cache is generated from the NAI, the IP address, and the lifetime, which are notified by the event.

In step S333, the SP original 32 is read according to the NAI notified by the event, and service information is extracted.

In step S334, a service profile cache is generated from the extracted service information. Details of the generation process will be described later.

In step S335, the corresponding service profile is notified to the service profile distributing unit 34, and the process is terminated.

In step S336, the address cache corresponding to the NAI notified by the event is deleted.

In step S337, source and destination addresses in the service profile cache are searched with the IP address of the corresponding address cache, and the corresponding entry is deleted from the service profile cache. Note that the corresponding entry is actually deleted after the corresponding service profile is detached from the distribution queue.

In step S338, the corresponding service profile is notified to the service profile distributing unit 34, and the process is terminated.

In step S339, the service profile notified with the message is registered to the service profile cache. If the IP address of the notified service profile has not been solved yet, it is solved. If the IP address has been solved, this service profile is recognized as a service profile to be distributed.

In step S3310, the corresponding service profile is notified to the service profile distributing unit 34, and the process is terminated. steps S3311 to S3313 (shown in (b) of Fig. 37) are a periodical process of the service profile controlling unit 33, which runs independently from the service profile cache setting/release process.

In step S3311, entries of the address cache are periodically monitored, and the lifetime of an address cache entry is reduced.

In step S3312, if the lifetime of the address cache expires (the value of the lifetime is 0), the process proceeds to step S3313. If the lifetime does not expire yet, the process goes back to step S3311.

In step S3313, the corresponding entry of the service profile cache is identified and deleted with the IP address of the corresponding address cache.

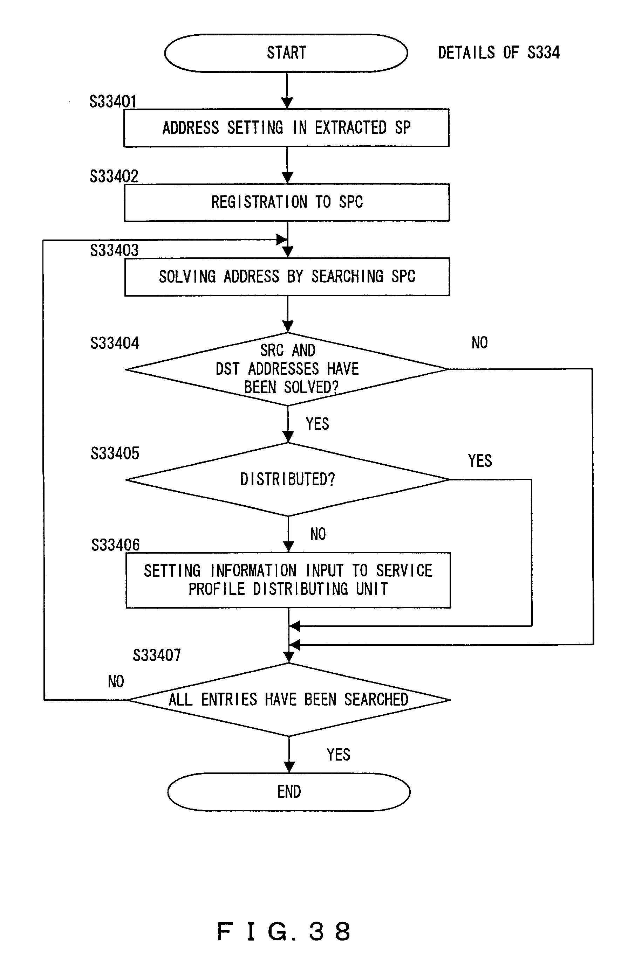

Fig. 38 shows the process flow of step S334 (service profile generation process) shown in Fig. 37.

In step S33401, a service profile is generated from the service control information extracted from the SP original 32, and the IP address corresponding to the NAI set as the identification of the host is set.

In step S33402, the generated service profile is registered to the service profile cache.

In step S33403, the service profile cache is searched, and an address is solved for a service profile whose IP address has not been set yet (IP address is 0) while referencing the address cache.

In step S33404, it is checked whether or not the source and the destination addresses of the service profile have been solved. If the addresses have been solved, the process proceeds to step S33405. If the addresses have not been solved yet, the process jumps to step S33407.

In step S33405, the state of the service profile is examined. If the service profile has been distributed, the process jumps to step S33407. If the service profile has not been distributed yet, the process proceeds to step S33406.

In step S33406, a pointer to the service profile is set as the information input to the service profile distributing unit, and "distributed" is set as the state of the service profile.

In step S33407, it is examined whether or not all of entries of the service profile cache have been searched. If all of the entries have been searched, the process is terminated. If all of the entries have not been searched yet, the process goes back to step S33403 and is continued.

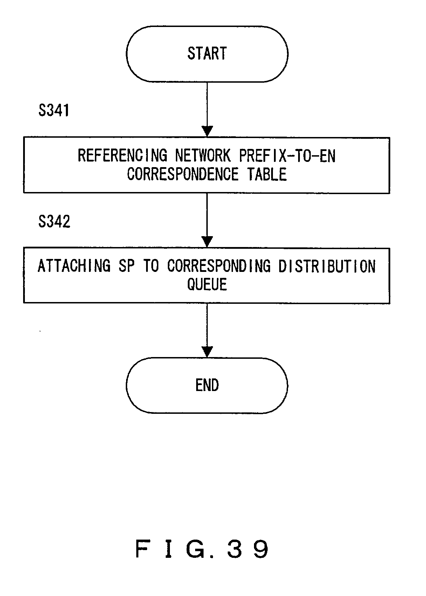

Fig. 39 shows the process flow of the service profile distributing unit 34.

In step S341, a network prefix is extracted from the source address of the service profile notified from the service profile controlling unit 33, and the network prefix-to-EN correspondence table is referenced, so that the network device 2 at the service profile distribution destination is identified.

In step S342, the service profile is attached to the distribution queue corresponding to the network device 2, and the process is terminated.

A stateless address configuration of the IPv6 is exemplified below as a specific embodiment of the technique B of the present invention. The IETF draft draft-perkins-aaav6-0.3 proposes a method making the automatic address configuration and an AAA server cooperate with each other by using the IPv6. Operations performed in the case where the technique B of the present invention is applied to the method according to this draft are described in detail below.

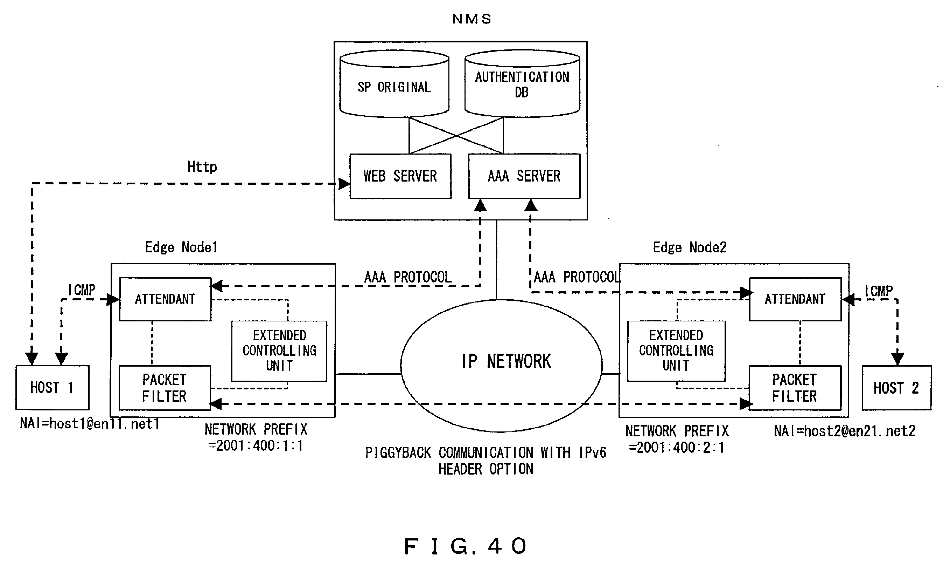

Fig. 40 shows the configuration of a system according to a preferred embodiment (example of an IPv6 network access using an AAA) of the present invention.

A network device (Edge Node 1 or Edge Node 2) corresponds to a router system, and an attendant is the same as that stipulated by the draft-perkins-aaav6-03.txt in terms of functions. A packet filter corresponds to the packet controlling unit 20 shown in Fig. 10. However, the type of the filter or its controlling method are unique to the technique B of the present invention. The access monitoring unit 21 (see Fig. 10) and the service controlling unit 23 (see Fig. 10), which are not stipulated by the draft-perkins-aaav6-03.txt and unique to the technique B of the present invention, are represented as an extended controlling unit. A server (NMS) corresponds to an AAA server. An ICMP AAA protocol stipulated by the draft-perkins-aaav6-03.txt is used as a protocol between a host (host 1 or host 2) and the edge router (Edge Node 1 or Edge Node 2). The draft-perkins-aaav6-03.txt stipulates that an AAA protocol for the IPv6 is used as the protocol between the edge router and the AAA server. However, this protocol has not been standardized yet. Therefore, a DIAMETER protocol having the same function as that of an assumed protocol is used. Accordingly, explanation is provided by assuming that the AHR and the AHA messages of the draft-perkins-aaav6-03.txt are the same as the AMR and the AMA of the DIAMETER protocol.

### 1. service profile original setting

To implement a service according to the technique B of the present invention, a user must register the service to a server which manages a domain or an ISP to which the user belongs.

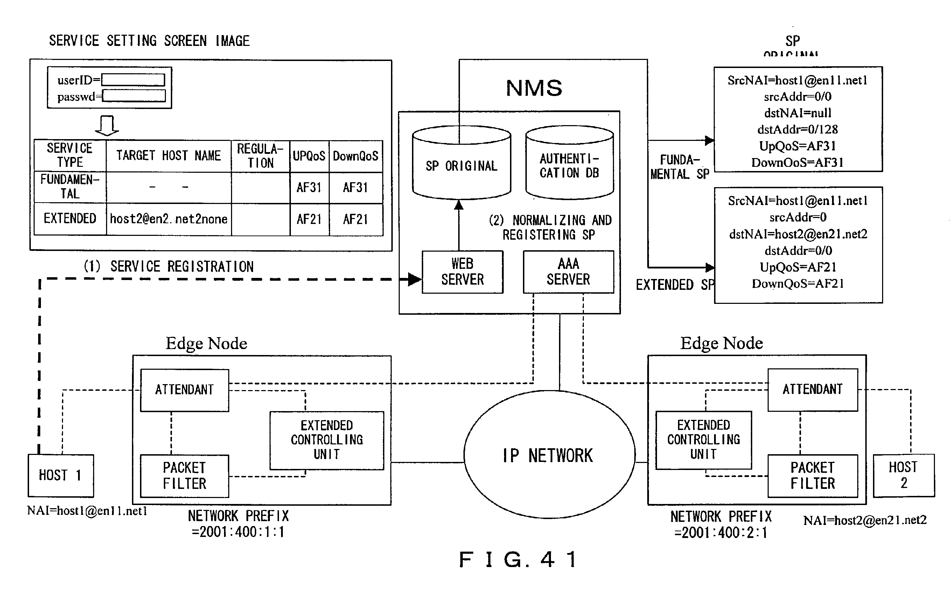

Fig. 41 shows the sequence for registering a service (example of setting a service profile).
(1) A user accesses a WEB server from a host via an http protocol, and registers a service. An application of the WEB server presents to the user items such as a service type, a target host name, a regulation condition, a service quality applied to an upstream or a downstream direction, and the like, and prompts the user to set necessary information.
(2) The application of the WEB server normalizes input information to the format shown in Fig. 32, and registers the information to a service profile original. This preferred embodiment assumes that a user of the host 1 sets Diffserve AF31 in a service quality in the upstream/downstream directions of the host 2 as a fundamental service which does not specify a communication partner, and Diffserve AF21 in a service quality in the upstream/downstream directions as an extended service which specifies a communication partner.

### 2. service profile distribution when the host 1 obtains an address

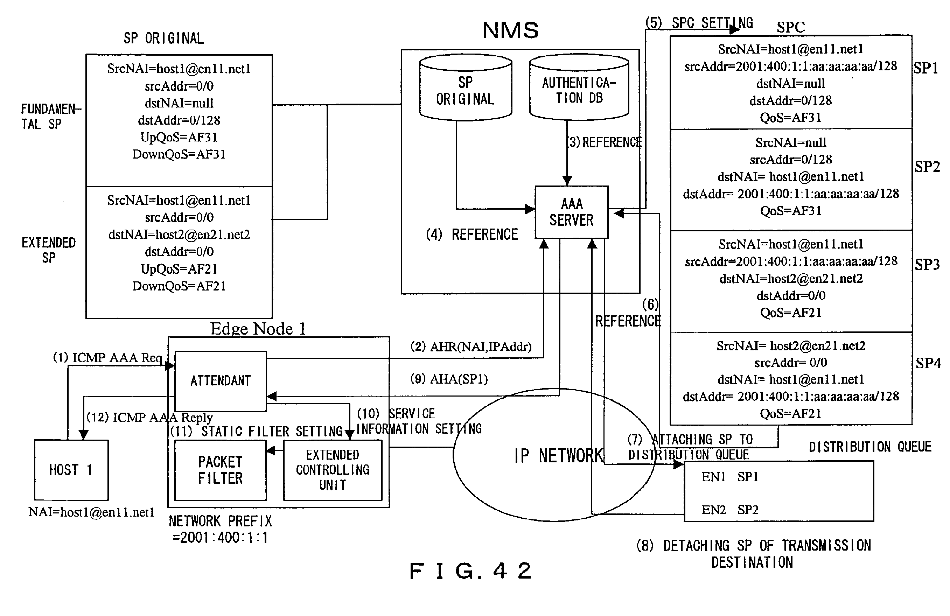

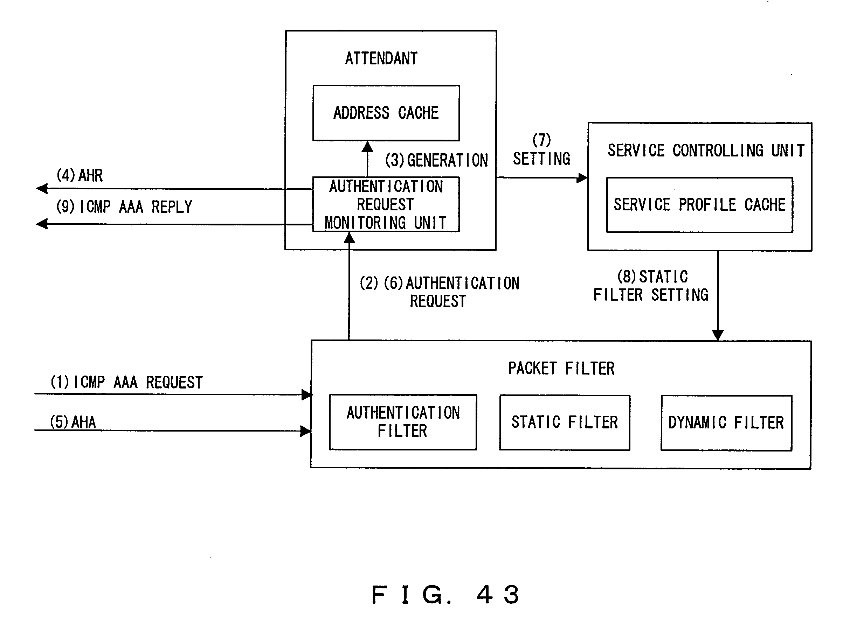

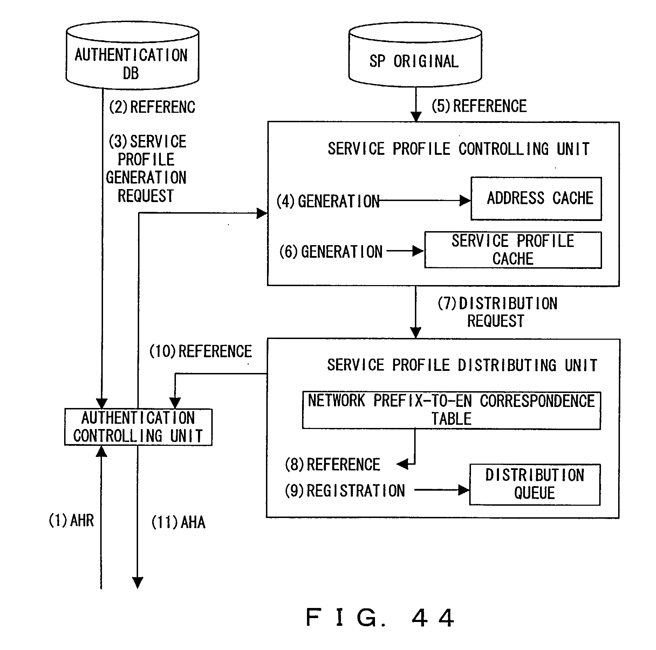

Fig. 42 shows an entire sequence (example of distributing a service profile) when the host 1 obtains an address. Fig. 43 shows the details of the process sequence of the network device, whereas Fig. 44 shows the details of the process sequence of the server.

The entire flow is described with reference to Fig. 42, and Figs. 43 and 44 if necessary.
(1) When the host 1 is connected to a network, it transmits an ICMP AAA Request message to an edge node, and makes an address obtainment request.
(2) The edge node transmits an AHR message to an AAA server at the timing of receiving the ICMP AAA Request message. With this message, the edge node notifies the NAI of the host 1 (host1@en11.net1), and an IP address (2001:400:1:1:aa:aa:aa:aa) ((1) to (4) of Fig. 43: (1) - steps S201 to S202 to S207 of the packet controlling unit in Fig. 26; and (2), (3), and (4) - steps S221 to S222 to S223 to S228 to S229 to S2210 of the attendant in Fig. 28).
(3) The AAA server searches the authentication database with the NAI (host1@en11.net1) upon receipt of the AHR message, and authenticates this host ((1) and (2) of Fig. 44: (1) and (2) - steps S301 to S302 to S303 to S304 to S306 of the authentication controlling unit in Fig. 36).
(4) If the authentication is successfully made, an SP original is searched with the NAI (host1@en11.net1) ((3) to (5) of Fig. 44: (3), (4), and (5) - steps S331 to S332 to S333 to S334 of the service profile controlling unit in Fig. 37).
(5) A service profile cache is set according to the extracted service profile. In this preferred embodiment, service profiles extracted with the NAI (host1@enl1.netl) from the SP original are fundamental and extended SPs in which SrcNAI=host1@en11.net1 is set, and a total of 4 service profiles SP1 to SP4 are generated for communications in the upstream and the downstream directions, and set in the service profile cache. Additionally, since the IP address corresponding to the NAI (host1@en11.net1) is notified at this time, the address 2001:400:1:1:aa:aa:aa:aa is set in the corresponding address field ((6) of Fig. 44: (6) - steps S33401 to S33402 to S33403 of the service profile controlling unit in Fig. 38).
(6) The AAA server examines whether or not there is an SP whose source and destination addresses have been solved by referencing the SPC (Service Profile Cache) . At this stage, SP1 and SP2 have been address-solved. For SP3 and SP4, the address corresponding to the NAI= host2@en21.net2 has not been solved yet ((6) of Fig. 44: (6) - steps S33404 to S33405 to S33406 to S33407 of the service profile controlling unit in Fig. 38).
(7) Distribution destinations of the SP1 and the SP2 whose addresses have been solved are determined by referencing the network prefix-to-EN correspondence table. Since the network prefix of the source address of the SP1 is 2001:400:1:1, the EN1 is determined as a distribution destination. Additionally, because the network prefix of the source address of the SP1 is 0, all of ENs are targeted as distribution destinations. However, if the network prefix of the destination address is the same as that of an EN at a distribution destination, this EN is not targeted as a distribution destination. The reason is that the service control for a local network of an edge node is not targeted by the technique B of the present invention. Accordingly, only the EN 2 is determined as a distribution destination for the SP2. Then, the service profiles whose distribution destinations have been determined are attached to the distribution queue ((7) to (9) of Fig. 44: (7), (8), and (9) - steps S341 to S342 of the service profile distributing unit in Fig. 39)
(8) An AHA message is edited as a reply to the AHR message. At this time, a service profile attached to the distribution queue is extracted and added to the AHA message. Since the transmission destination of the AHA is the EN1 in this example, the SP1 is detached from the queue, and added to the AHA message ({10} of Fig. 44: {10} - step S307 of the authentication controlling unit in Fig. 36).
(9) The service profile (SP1) is distributed with the AHA message.
{10} The service profile notified with the AHA message is registered to the service profile cache ((5) to (7) of Fig. 43: (5) - steps S201 to S202 to S207 of the packet controlling unit in Fig. 26; and (6) and (7) - steps S221 to S222 to S223 to S224 of the attendant in Fig. 28).
{11} Settings are made to the static filter by referencing the service profile. As a method regulating an illegal access to a network, there is a method with which an edge node discards a packet by using the source address of the packet as a filtering condition (normally known as source filtering) . Because the source filtering requires a search of a complete match of the source address of a packet, filtering must be normally prepared for all of addresses that the edge node can possibly assign. Additionally, since a search table for executing a service exists separately from this filtering process, the edge node requires a large storage region. With the technique B of the present invention, the source filtering and the process for applying a service profile are integrated by using the filter shown in Fig. 23, so that the storage region can be reduced. Source filtering methods include (1) a method initially making a setting for discarding packets whose source address is all of addresses under the control of an edge node, and for making only a packet whose source address is the address of an authenticated user pass through, and (2) a method initially making all of packets pass through, examining whether or not the source address of a packet has been authenticated upon receipt of the packet whose source address mismatches a source filter, and dynamically discarding the packet having this source address if the address has not been authenticated. In the case of the method (1), with the technique B of the present invention, an edge node respectively presets 2001:400:1:1:aa:aa:aa:aa, 128, and packet discarding as the source address, the source prefix length , and the action of the filter shown in Fig. 23. The other parameters are not specified particularly. When the service profile is notified after being authenticated, the TOS is marked and notification to a partner node is set in the filter entry according to the service profile. In the case of the method (2), the initially set filter which conditions the source address 2001:499:1:1:aa:aa:aa:aa explained in the method (1) does not exist. Therefore, a new filter in which the TOS is marked and notification to a partner node is set is generated ((8) of Fig. 43: (8) - steps S231 to S232 to S233 of the service controlling unit in Fig. 30). {12} An ICMP AAA Reply message is transmitted in response to the ICMP AAA Request ((9) of Fig. 43: (9) - step S2218 of the attendant in Fig. 28).

### 3. service profile distribution when the host 2 obtains an address

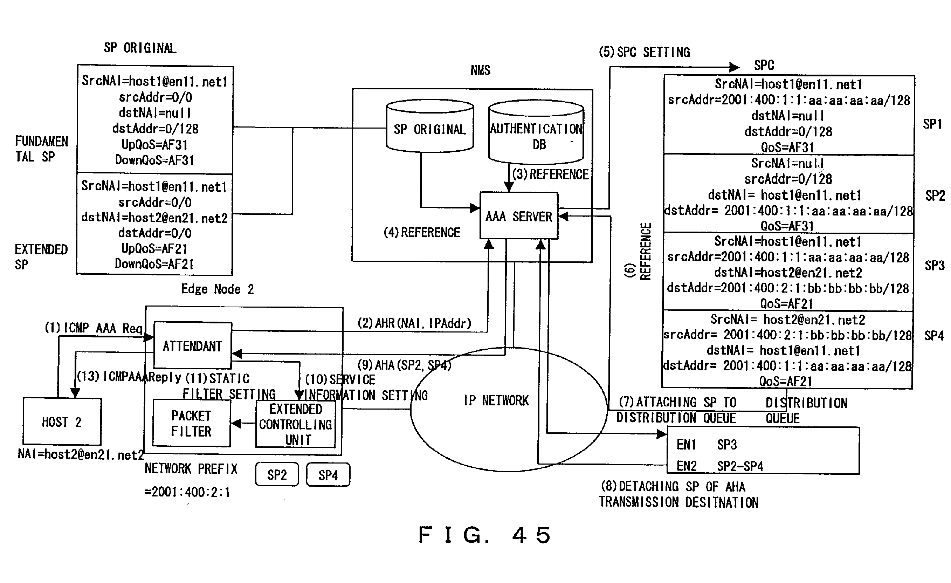

Fig. 45 shows an entire sequence (example of distributing a service profile) when the host 2 obtains an address after the host 1 obtains an address.

The entire flow is described with reference to Fig. 45, and Figs. 43 and 44 if necessary.
(1) After the host 2 is connected to a network, it transmits an ICMP AAA request message to an edge node, and makes an address obtainment request.
(2) The edge node transmits an AHR message to an AAA server at the timing of receiving the ICMP AAA Request message. With this message, the edge node notifies the NAI of the host 2 (host2@en21.net2) and its IP address (2001:400:2:1:bb:bb:bb:bb) ((1) to (4) of Fig. 43: (1) - steps S201 to S202 to S207 of the packet controlling unit in Fig. 26; and (2), (3), and (4) - steps S221 to S222 to S223 to S228 to S229 to S2210 of the attendant in Fig. 28).
(3) Upon receipt of the AHR message, the AAA server searches the authentication database with the NAI (host2@en21.net2), and authenticates this host ((1) and (2) of Fig. 44: (1) and (2) - steps S301 to S302 to S303 to S304 to S306 of the authentication controlling unit in Fig. 36).
(4) If the authentication is successfully made, the SP original is searched with the NAI (host2@en21.net2) ((3) to (5) of Fig. 44: (3), (4), and (5) - steps S331 to S332 to S333 to S334 of the service profile controlling unit in Fig. 37).
(5) The service profile cache is set according to the extracted service file. This preferred embodiment assumes that the host 2 does not register any service. Accordingly, a new service file is not generated. Furthermore, since the IP address of the NAI (host2@en21.net2) is notified at this time, the address 2001:400:2:1:bb:bb:bb:bb is set in the corresponding address field of the service profile which has been registered to the service profile cache ((6) of Fig. 44: (6) - steps S33401 to S33402 to S33403 of the service profile controlling unit in Fig. 38)
(6) The AAA server examines whether or not there is an SP whose source and destination addresses have been solved by referencing the service profile cache. At this stage, all of service profiles have been address-solved ((6) of Fig. 44: (6) - steps S3404 to S33405 to S33406 to S33407 of the service profile controlling unit in Fig. 38).
(7) Distribution destinations of the SP3 and the SP4 whose addresses are newly solved are determined by referencing the network prefix-to-EN correspondence table. Since the network prefix of the source address of the SP3 is 2001:400:1:1, the EN1 is determined as a distribution destination. Additionally, since the network prefix of the source address of the SP4 is 2001:400:2:1, the EN2 is determined as a distribution destination. The SP1 and the SP2 are not targeted as distribution destinations, because they have been already distributed. The service profiles whose distribution destinations have been determined are attached to distribution queue ((7) to (9) of Fig. 44: (7), (8), and (9) - steps S341 to S342 of the service profile distributing unit in Fig. 39).
(8) An AHA message is edited as a reply to the AHR message. At this time, a service profile attached to the distribution queue of the transmission destination is detached, and added to the AHA message. Since the transmission destination of the AHA is the EN2 in this example, the SP2 which is attached when the host 1 is authenticated, and the SP4 which is attached this time are detached from the queue, and added to the AHA message ({10} of Fig. 44: {10} - step S307 of the authentication controlling unit in Fig. 36).
(9) The service profiles (the SP2 and the SP4) are distributed with the AHA message.
{10} The service profiles notified with the AHA message are registered to the service profile cache ((5) to (7) of Fig. 43: ((5) - step S201 to S202 to S207 of the packet controlling unit in Fig. 26; (6) and (7) - steps S221 to S222 to S223 to S224 of the attendant in Fig. 28).
{11} Settings are made to the static filter by referencing the service profiles. If a filter in which packet discarding is set in the action of the packet whose source address is 2001:400:2:1:bb:bb:bb:bb exists as a regulation filter of a packet, a Best Effort transfer is set in the action. For a system dynamically regulating a packet, there is no initially set filter which conditions the source address 2001:400:2:1:bb:bb:bb:bb. Therefore, a filter in which a Best Effort transfer is set in its action is newly generated. Additionally, filter entries corresponding to the two service profiles notified with the message are set. One of them is a filter which conditions that the destination address is 2001:400:1:1:aa:aa:aa:aa, the TOS is marked with AF31, whereas a filter which conditions that the source address is 2001:400:1:1:aa:aa:aa:aa, and the TOS is marked with AF21 (8) of Fig. 43: (8) - steps S231 to S232 to S233 of the service controlling unit in Fig. 30).
{12} An ICMP AAA Reply message is transmitted in response to the ICMP AAA Request ((9) of Fig. 43: (9) step S2218 of the attendant in Fig. 28).

### 4. autonomous obtainment of a service profile

As explained with reference to Figs. 42 and 45, a service profile is added to an authentication reply message (AHA) , and distributed to an edge node. However, the SP3 has not been distributed to the edge node 1 at the stage where the explanation of Fig. 45 is terminated, and is not distributed until an authentication request is made from the edge node 1. Here, a method with which an edge node autonomously obtains a service profile in the case where the edge node does not make an authentication request for a predetermined time period.

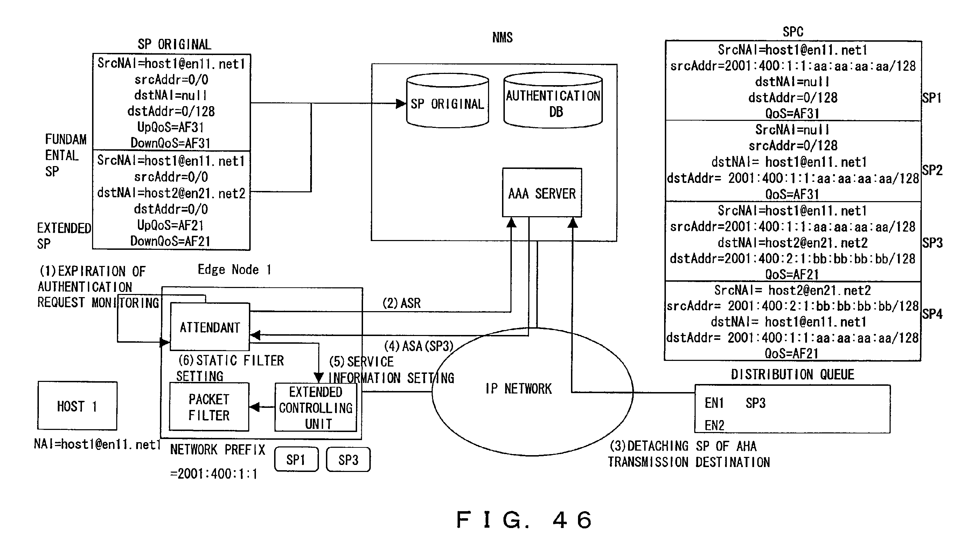

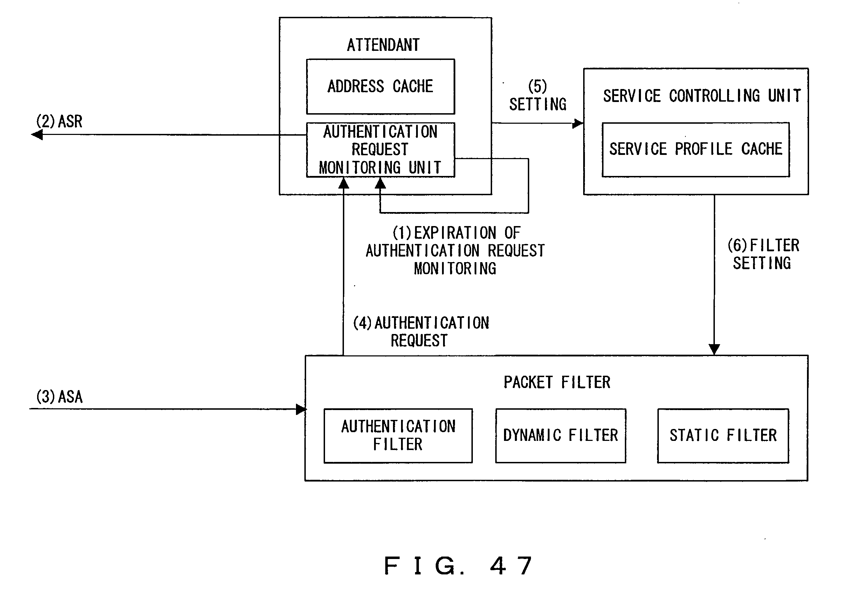

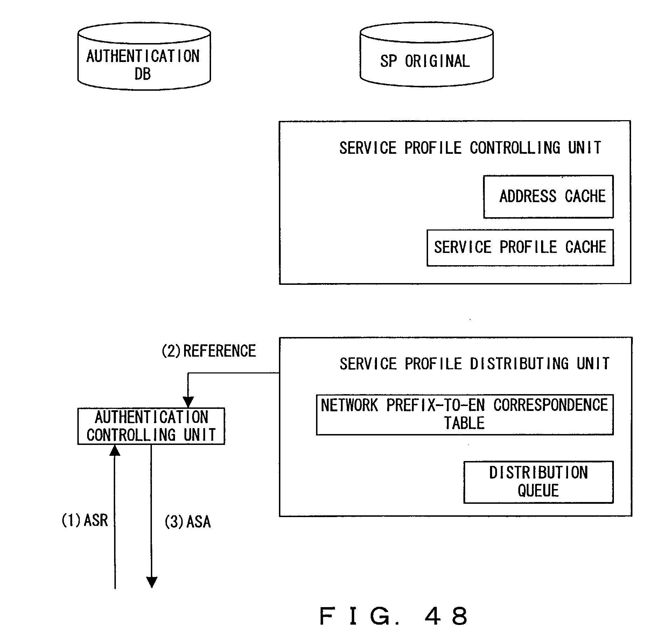

Fig. 46 shows an entire sequence in the case where the edge node 1 autonomously obtains a service profile. Fig. 47 shows the details of the process sequence of the network device, whereas Fig. 48 shows the details of the process sequence of the server.

The entire flow is described with reference to Fig. 46, and Figs. 47 and 48 if necessary.
(1) The attendant of the edge node monitors an authentication request event from the packet filter. If the authentication request event does not occur for a predetermined time period, the attendant edits an ASR message, and transmits the message to an AAA server ((1) and (2) of Fig. 47: (1) and (2) - steps S221 to S222 to S2213 of the attendant in Fig. 28).
(2) The AAA server receives the ASR message ((1) of Fig. 48: (1) - step S301 of the authentication controlling unit in Fig. 29).
(3) The AAA server edits an ASA message, detaches a service profile from a corresponding distribution queue by referencing the queue, adds the service profile to the ASA message, and transmits the message to the edge node 1 at the transmission source of the ASR. In this preferred embodiment, the SP3 is detached and transmitted to the edge node 1 ((2) and (3) of Fig. 48: (2) and (3) - step S309 of the authentication controlling unit in Fig. 36).
(4) The service profile is distributed with the ASA message.
(5) The service profile notified with the ASA message is registered to the service profile cache ((3) to (5) of Fig. 47: (3) - steps S201 to S202 to S207 of the packet controlling unit in Fig. 26; and (4) and (5) - steps S221 to S222 to S223 to S2212 of the attendant in Fig. 28).
(6) Settings are made to the static filter by referencing the service profile. The filter corresponding to the SP3 notified with the message is set. The condition of the filter includes the source address 2001:400:1:1:aa:aa:aa:aa, the destination address 2001:400:2:1:bb:bb:bb:bb, and the TOS in which the AF 21 is marked((6) of Fig. 47: (6) - steps S231 to S232 to S233 of the service controlling unit in Fig. 30).

### 5. expiration of an address lifetime

Up to this point, the service profile settings are exemplified. A method deleting a service profile is described below.

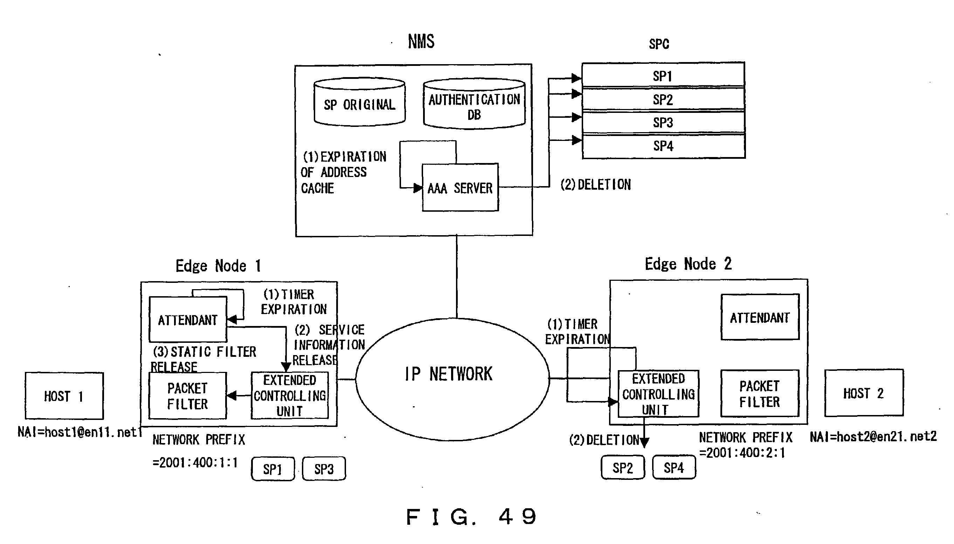

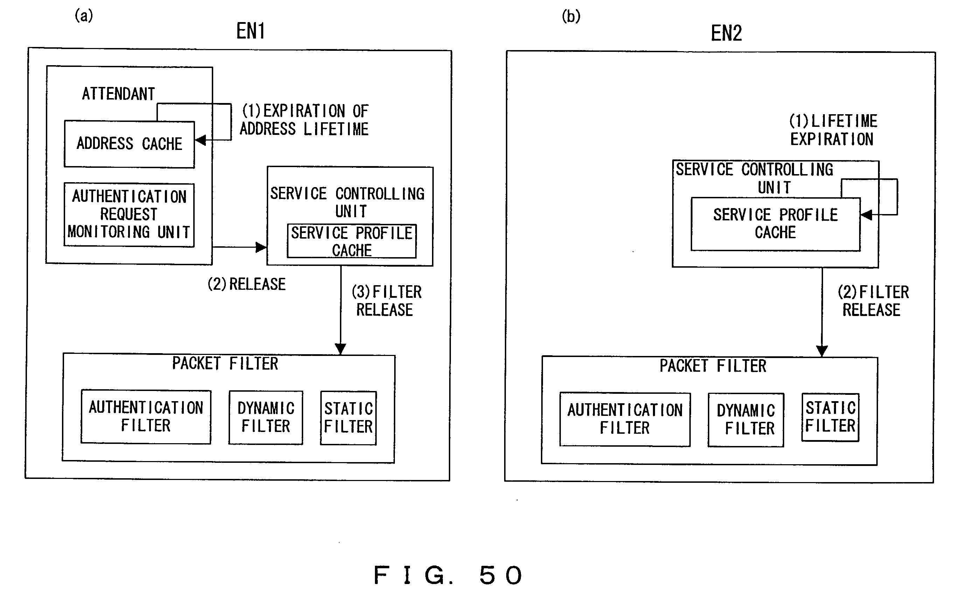

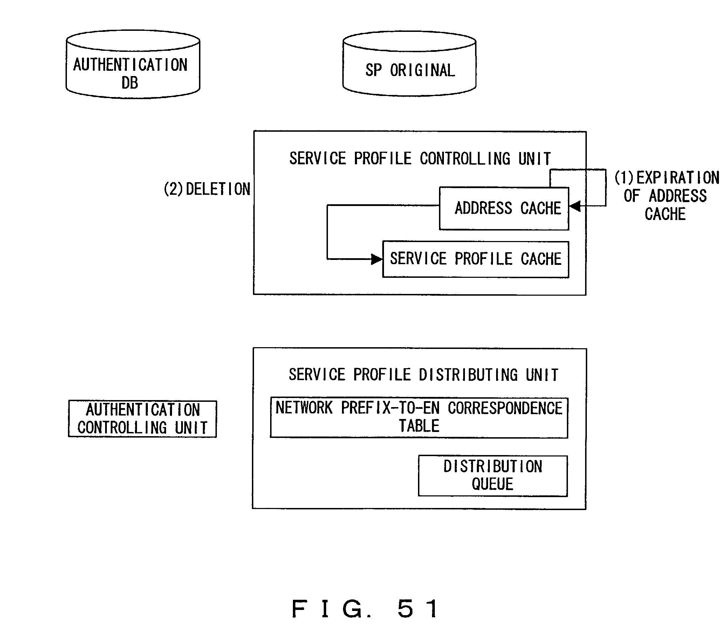

Fig. 49 shows an entire process sequence when the address lifetime of the host 1 expires. Fig. 50 shows the details of the process sequence of the network device, whereas Fig. 51 shows the details of the process sequence of the server.

The entire flow is described with reference to Fig. 49, and Figs. 50 and 51 if necessary.

A service profile is autonomously deleted in each of devices, fundamentally, according to a synchronous timer that is set when the service profile is distributed. Accordingly, a process for deleting a service profile is explained for each of the devices.

### "edge node 1"

The edge node accommodating the host 1 comprises an address cache of the host 1, and deletes the service profile of the host 1 upon expiration of the lifetime of an address cache registered to the address cache.

The address cache is monitored, and a service profile deletion event is notified to the service profile controlling unit when the lifetime of the address cache expires ((1) of Fig. 50: (1) - steps S2214 to S2215 to S2216 to S2217 of the attendant shown in Fig. 29).

The service profile of the IP address (2001:400:1:1:aa:aa:aa:aa in this example) notified by the event is searched. In this preferred embodiment, the SP1 and the SP2 are searched ((2) of Fig. 50: (2) - steps S231 to S234 of the service controlling unit in Fig. 30).

The static filter corresponding to the service profile is deleted ((3) of Fig. 50: (3) step S235 of the service controlling unit in Fig. 30).

### "edge node 2"

To the edge node 2, the service profile of the host 1 is distributed. However, since the edge node 2 does not comprise an address cache of the host 1, it deletes the service profile of the host 1 upon expiration of the lifetime of the service profile, which is set when the service profile is registered. As the lifetime of a service profile, either of the lifetimes of the source and the destination addresses, which is a shorter remaining time, is set by the AAA. server.
(1) The service profile cache is monitored, and whether or not the lifetime of an entry expires is examined ((1) of Fig. 50: (1) - steps S236 to S237 to S238 of the service profile controlling unit in Fig. 30).
(2) The static filter corresponding to the service profile is deleted ((2) of Fig. 50: (2) - step S239 of the service controlling unit in Fig. 30).

### "AAA server"

(1) The address cache is monitored, and whether or not the lifetime of an address cache expires is examined ((1) of Fig. 51: (1) - steps S3311 to S3312 of the service profile controlling unit in Fig. 37).
(2) The service profile cache corresponding to the IP address of the address cache is deleted ((2) of Fig. 51: (2) - step S3313 of the service profile controlling unit in Fig. 37).

### 6. explicit address releasing by the host 1

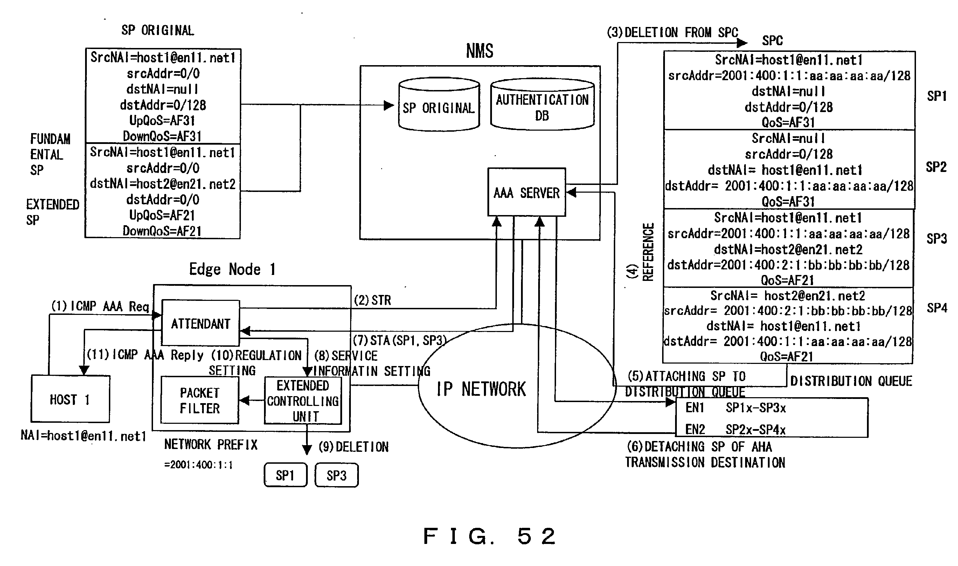

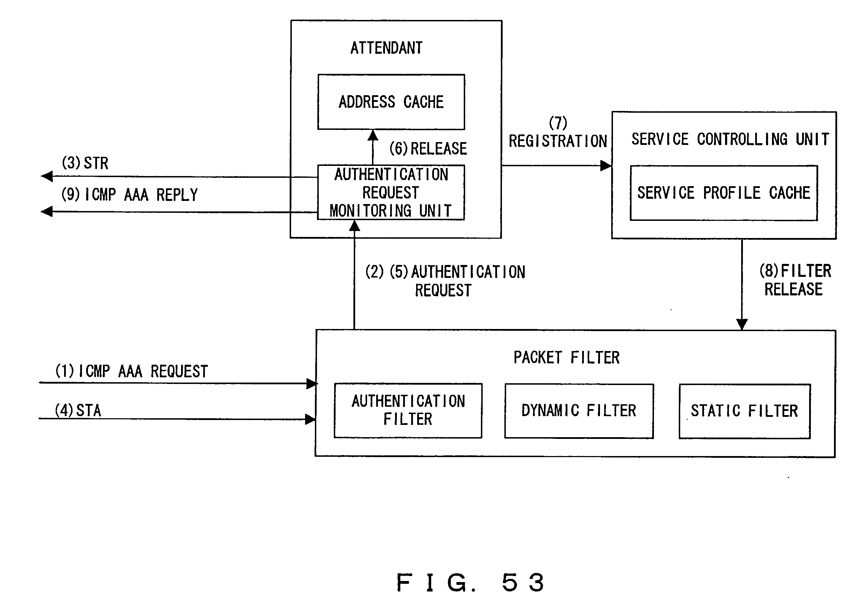

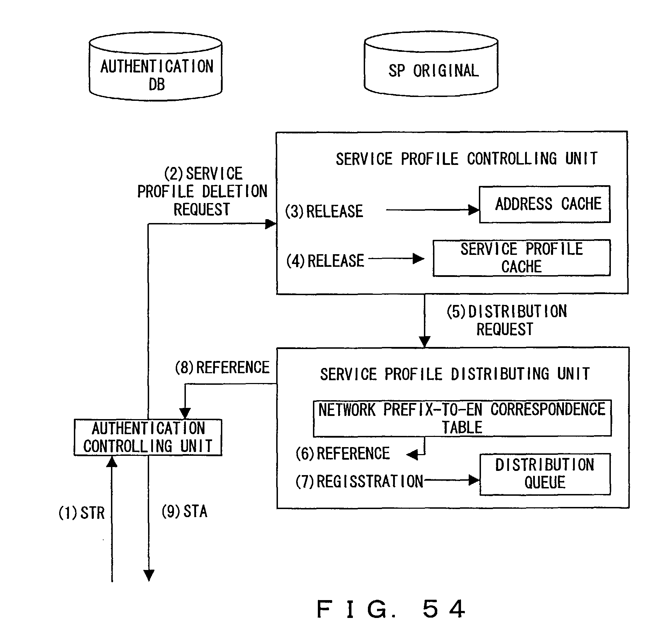

Fig. 52 shows an entire sequence when the host 1 releases an address. Fig. 53 shows the details of the process sequence of the network device, whereas Fig. 54 shows the details of the process sequence of the server.

The entire flow is described with reference to Fig. 52, and Figs. 53 and 54 if necessary.
(1) Upon termination of a communication, the host 1 makes an address release request by setting the lifetime of an ICMP AAA Request message to 0, and by transmitting the message to the edge node.
(2) The edge node notifies the AAA server of an STR message at the timing of receiving the ICMP AAA Request message. With this message, the edge node notifies the NAI of the host 1 (host1@en11.net1) ((1) to (3) of Fig. 53: (1) - steps S201 to S202 to S207 of the packet controlling unit in Fig. 26; and (2) and (3) - steps S221 to S222 to S223 to S228 to S2211 of the attendant in Fig. 28).
(3) Upon receipt of the STR message, the AAA server identifies the address cache according to the notified NAI (host1@en11.net1), and deletes the corresponding service profile cache. Additionally, a service profile where release is set in a control code is set to be distributed to the edge node. In this preferred embodiment, the SP1, the SP2, the SP3, and the SP4 are targeted, and service profiles where deletion is set in a control code are newly generated ((1) to (4) of Fig. 54: (1) and (2) - steps S301 to S3012 to S3013 of the authentication controlling unit in Fig. 36; and (3) and (4) - steps S331 to S336 to S337 of the service profile controlling unit in Fig. 37).
(4) The AAA server examines whether or not an SP whose source and destination addresses have been solved exists by referencing the SPC. At this stage, the SP1, the SP2, the SP3, and the SP4 have been address-solved ((5) of Fig. 54: (5) - step S338 of the service profile controlling unit in Fig. 37).
(5) Distribution destinations of the SP1, the SP2, the SP3, and the SP4 whose addresses have been solved are determined by referencing the network prefix-to-EN correspondence table. Since the network prefix of the source address of the SP1 and the SP3 is 2001:400:1:1, the EN1 is determined as a distribution destination. Although the network prefix of the source address of the SP2 is 0, the EN2 is determined as a distribution destination due to the above described reason. The network prefix of the source address of the SP4 is 2001:400:2:1. Therefore, the EN2 is determined as a distribution destination. The service profiles whose distribution destinations have been determined are attached to the distribution queue ((6) and (7) of Fig. 54: (6) and (7) - steps S341 to S342 of the service profile distributing unit in Fig. 39).
(6) An STA message is edited as a reply to the STR message. At this time, a service profile attached to a distribution queue of a transmission destination is detached, and added to the STA message. Since the transmission destination of the STA is the EN1 in this example, the SP1 and the SP3 are detached from the queue, and added to the STA message ((8) and (9) of Fig. 54:
(8) and (9) - step S3014 of the authentication controlling unit in Fig. 36).
(7) The service profiles (the SP1 and the SP3) are distributed with the STA message.
(8) The service profiles notified with the STAmessage are registered to the service profile cache ((4) to (7) of Fig. 53: (4) and (5) - steps S201 to S202 to S207 of the packet controlling unit in Fig. 26; and (6) and (7) - steps S221 to S222 to S223 to S225 of the attendant in Fig. 28).
(9) Service profiles are registered/released according to the control code of the notified service profiles. Since release is set in the control code of the notified service profiles the SP1 and the SP3 in this embodiment, service profiles having the same profile numbers are searched and deleted from the service profile cache (steps S231 to S232 of the service controlling unit in Fig. 30).
{10} Settings are made to the static filter by referencing the service profiles. Since the service type of the SP1 is a fundamental service, the action of the static filter corresponding to the SP1 is rewritten to packet discarding if the static filter is used as a regulation filter. Additionally, because the service type of the SP3 is an extended service, the static filter is released ({10} of Fig. 52: {10} - step S233 of the service controlling unit in Fig. 30).
{11} An ICMP AAA Reply message is transmitted in response to the ICMP AAA request, and the address cache is deleted ((9) of Fig. 53: (9) - steps S226 to S227 of the attendant in Fig. 28).

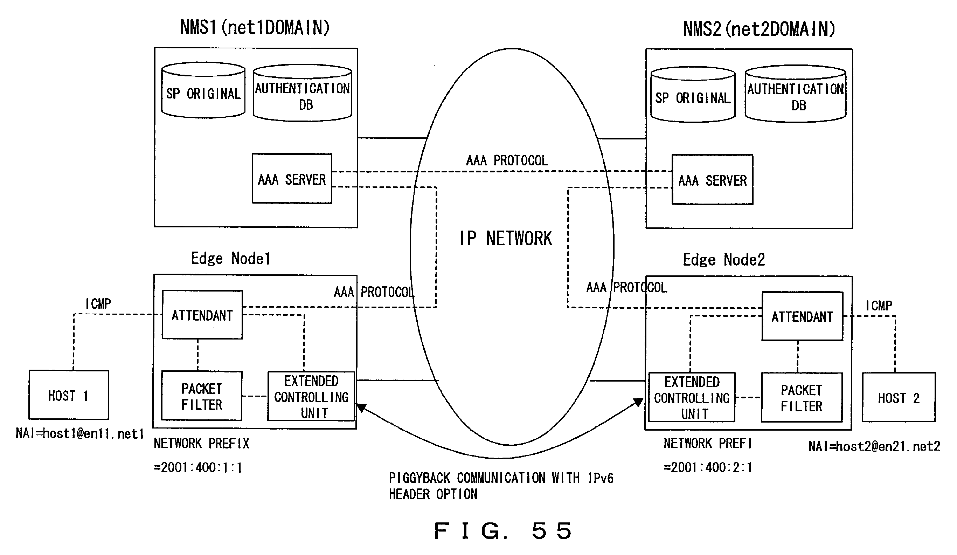

Fig. 55 shows the configuration of a system according to a preferred embodiment in the case where a communication is made between domains.

An AAA server exists in each managed domain, and a communication is made between AAA servers with the same AAA protocol as that for a single domain.

### 7. service profile distribution between domains

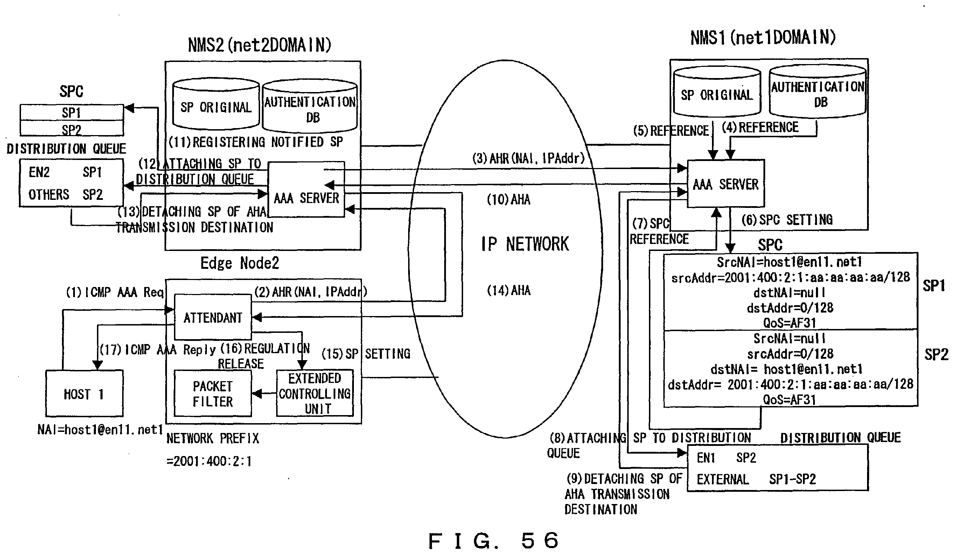

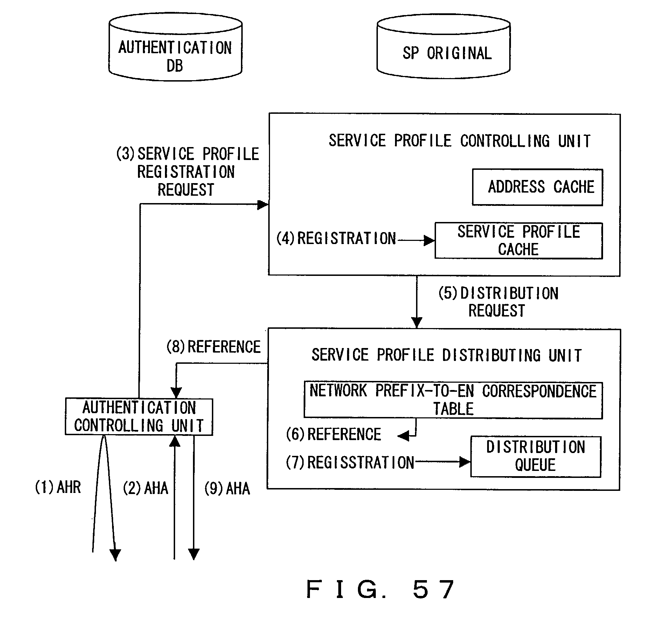

Fig. 56 shows an entire sequence when the host 1 is connected to a network not via a local domain network netl (net1 domain:server) but via a net2 (net2 domain: server) which makes a roaming contract with the net1, and obtains an address. Fig. 57 shows the details of the server in the net2 domain.

The entire flow is described with reference to Fig. 56, and Fig. 57 if necessary. The flow other than a portion where a process differs in a communication made between domains was earlier explained. Therefore, details of the explanation are omitted. This example assumes that the host 1 registers only a fundamental service to an SP original.
(1) When being connected to the network, the host 1 transmits an ICMP AAA Request message to an edge node, and makes an address obtainment request.
(2) The edge node notifies an AHR message at the timing of receiving the ICMP AAA Request message. With this message, the edge node notifies the NAI of the host 1 (host1@en11.net1), and an IP address (2001:400:2:1:aa:aa:aa:aa).
(3) Upon receipt of the AHR message, the AAA server examines the NAI (host1@en11.net1), and transfers the AHR to the AAA server in the home domain net1 of the host 1 because the NAI does not indicate the host of the local domain ((1) of Fig. 57: steps S301 to S302 to S308 of the authentication controlling unit in Fig. 36).
(4) The AAA server in the home domain searches the authentication database with the NAI (host1@en11.net1) upon receipt of the AHR message, and authenticates this host.
(5) If the authentication is successfully made, the SP original is searched with the NAI (host1@en11.net1).
(6) A service profile cache is set according to an extracted service profile. In this preferred embodiment, the service profile extracted with the NAI (host1@en11.net1) from the SP original is a fundamental SP in which SrcNAI=host1@en11.net1 is set, and a total of 2 service profiles SP1 and SP2 are generated for upstream and downstream communications, and set in the service profile cache. Additionally, since the IP address corresponding to the NAI (host1@en11.net1) is notified at this time, the address 2001:400:2:1:aa:aa:aa:aa is set in the corresponding address field.
(7) The AAA server examines whether or not an SP whose source and destination addresses have been solved exists by referencing the SPC. At this stage, the SP1 and the SP2 have been address-solved.
(8) Distribution destinations of the SP1 and the SP2 whose addresses have been solved are determined by referencing the network prefix-to-EN correspondence table. Since the network prefix of the source address of the SP1 is 2001:400:2:1, and this network prefix does not indicate the edge node that this domain manages in this example. Therefore, an external queue is determined as a distribution destination. Additionally, because the network prefix of the source address of the SP2 is 0, all of ENs and the external queue are determined as distribution destinations. The service profiles whose distribution destinations have been determined are attached to the distribution queues.
(9) An AHA message is edited as a reply to the AHR message. At this time, a service profile attached to a distribution queue is extracted and added to the AHA message. Since the transmission destination of the AHA is the AAA server in the external domain in this example, the SP1 and the SP2 are detached from the external queue, and added to the AHA message.
(10) The service profile (the SP1) is distributed with the AHA message.
{11} The service profile notified with the AHA message is registered to the service profile cache ((2) to (5) of Fig. 57: (2) to (5) - steps S301 to S3010 of the authentication controlling unit in Fig. 36; and steps S331 to S339 to S3310 of the service profile controlling unit in Fig. 37).
(12) Distribution destinations of the SP1 and the SP2 whose addresses have been solved are determined by referencing the network prefix-to-EN correspondence table. Since the network prefix of the source address of the SP1 is 2001:400:2:1, the EN2 is determined as a distribution destination. Additionally, because the network prefix of the source address of the SP2 is 0, ENs are determined as distribution destinations. The service profiles whose distribution destinations have been determined are attached to the distribution queue ((6) and (7) of Fig. 57: (6) and (7) - steps S341 to S342 of the service profile distributing unit in Fig. 39).
(13) An AHA message is edited as a reply to the AHR message. At this time, a service profile attached to a distribution queue is detached and added to the AHA message. Since the transmission destination of the AHA is the EN2 in this example, the SP1 is detached from the external queue, and added to the AHA message.
(14) The service profile (the SP1) is distributed with the AHA message.
{15} The service profile notified with the AHA message is registered to the service profile cache.
{16} Settings are made to the static filter by referencing the service profile. If there is a filter in which packet discarding is set in the action of the packet whose source address is 2001:400:2:1:aa:aa:aa:aa exists as a regulation filter of a packet, the TOS is marked and notification to a partner node is set according to the notified service profile. In the case of the method dynamically. regulating a packet, the initially set filter which conditions the source address 2001:400:2:1:aa:aa:aa:aa does not exist. Therefore, a new filter in which the TOS is marked and notification to a partner node is set is generated.
{17} An ICMP AAA Reply message is transmitted in response to the ICMP AAA Request.

### 8. service application to a data packet

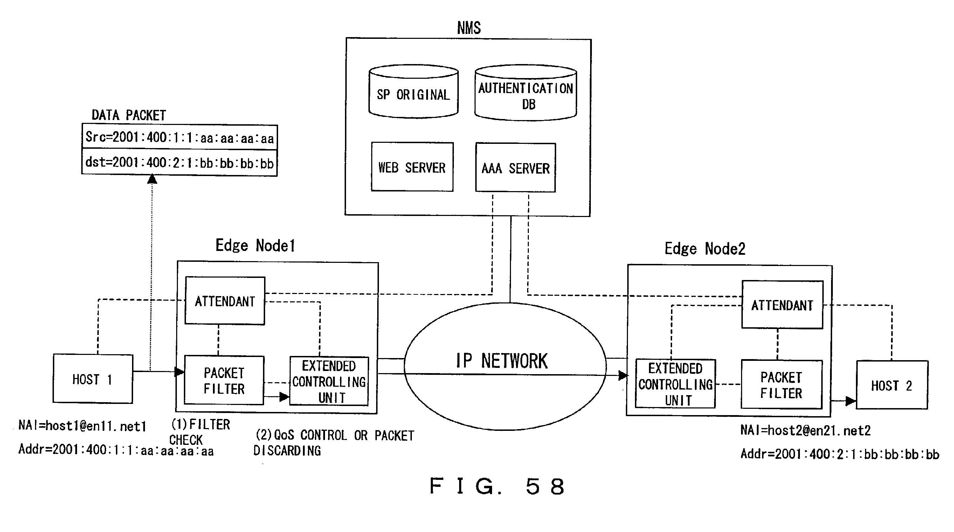

Fig. 58 shows the sequence (example of applying a service to a data packet) when the host 1 transmits a packet to the host 2 in the case where the static filter has been set in the edge node 1.
(1) The host 1 transmits a data packet to the host 2. This is a packet whose source address is 2001:400:1:1:aa:aa:aa:aa, and whose destination address is 2001:400:2:1:bb:bb:bb:bb.
(2) The respective packet filters are sequentially examined. Since this packet is neither an ICMP nor a DIAMETER packet, it does not match the authentication filter. The packet does not match also the dynamic filter, because it is not set. In the static filter, a packet which matches the source address 2001:400:1:1:aa:aa:aa:aa exists even before/after authentication. (steps S201 to S202 to S203 to s204 to S206 of the packet controlling unit in Fig. 26).

### 9. dynamic service application to a data packet

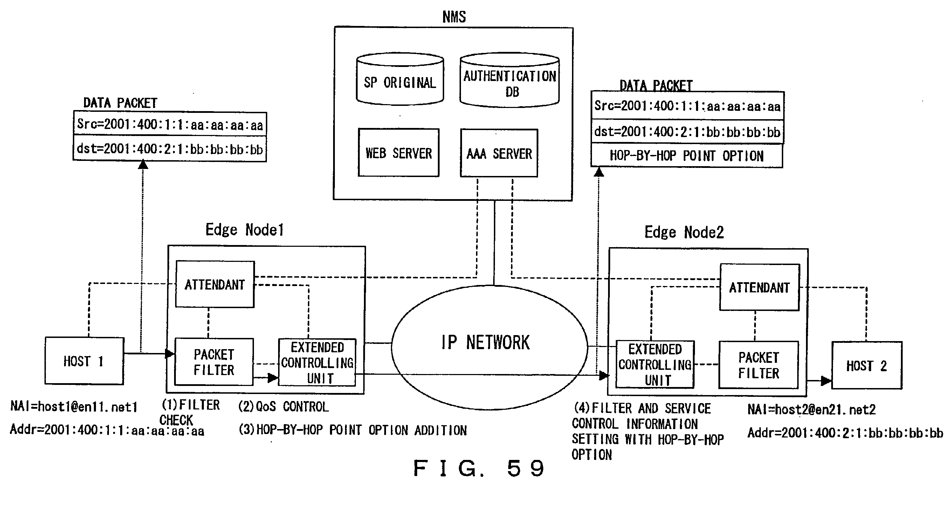

Fig. 59 shows the sequence (example of dynamically applying a service to a data packet) when a service profile is distributed to an edge node accommodating a communication destination host by applying a fundamental service to a data packet from the edge node 1.
(1) The host 1 transmits a data packet to the host 2. This is a packet whose source address is 2001:400:1:1:aa:aa:aa:aa, and whose destination address is 2001:400:2:1:bb:bb:bb:bb.
(2) The packet filters are sequentially examined. Since this packet is neither an ICMP nor a DIAMETER packet, it does not match the authentication filter. Since the dynamic filter is not set, the packet does not match also the dynamic filter. The packet whose source address is 2001:400:aa:aa:aa:aa matches the static filter in both of the cases of where authentication is made or not made. Since the filter entry in which packet discarding is set in the action exists if the authentication has not been made, the packet from the host before being authenticated is discarded here. Additionally, since the filter entry in which the TOS is marked and notification to a partner node is set exists if the authentication has been made, the packet is controlled according to an instruction set in the action (steps S201 to S202 to S203 to S204 to S206 of the packet controlling unit in Fig. 26).
(3) Here, this is an access after the authentication is made, the packet is TOS-marked, and then a hop-by-hop option is added. In this preferred embodiment, AF31 is set in QoS Requirement being the hop-by-hop option.
(4) The edge node 2 which receives the data packet in which the hop-by-hop option is set sets a dynamic filter entry by referencing the contents of the hop-by-hop option. Specifically, the destination address of the packet, the source address of the packet, and AF31 marking are respectively set as the source address, the destination address, and the TOS value.

### 10. dynamic packet filtering

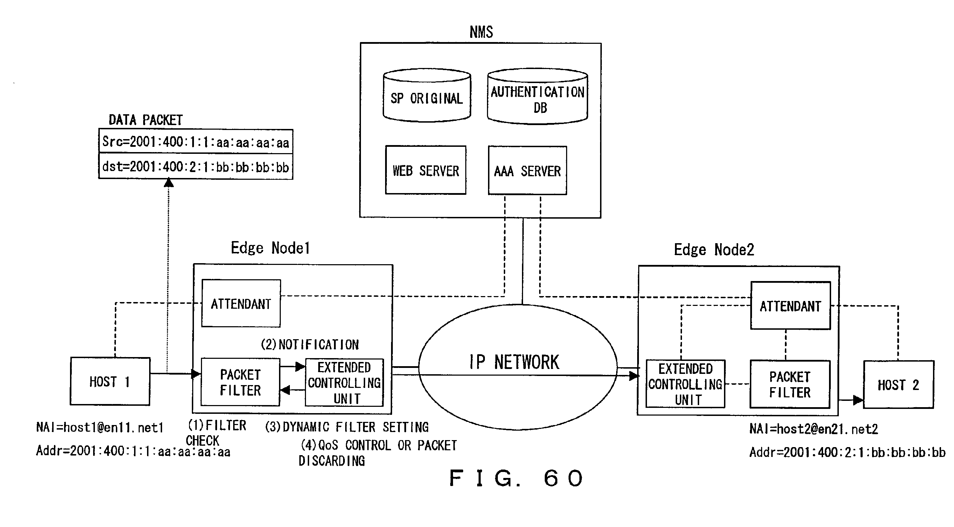

Fig. 60 shows the sequence in the case where packet filtering is dynamically made.
(1) The host 1 transmits a data packet to the host 2. This is a packet whose source address is 2001:400:1:1:aa:aa:aa:aa, and whose destination address is 2001:400:2:1:bb:bb:bb:bb.
(2) The packet filters are sequentially examined. Since this packet is neither an ICMP nor a DIAMETER packet, it does not match the authentication filter. Because the dynamic filter is not set, the packet does not match also this filter. This preferred embodiment assumes that a regulation filter is dynamically set. Therefore, the static filter is assumed not to be preset. Accordingly, the packet does not match also the static filter. Therefore, a packet mismatch event is notified to the access monitoring unit (steps s201 to S202 to S203 to S204 to S205 of the packet controlling unit in Fig. 26).
(3) The access monitoring unit searches the address cache with the source address of the notified packet. If the corresponding entry exists, the access monitoring unit generates a dynamic filter entry by referencing the service profile (steps S211 to S212 to S213 to S214 of the access monitoring unit in Fig. 31). If the corresponding entry does not exist, this packet is logged, and a regulation policy for regulating this packet is generated and set in the dynamic filter entry (steps S211 to S212 to S215 to S216 to S217 of the access monitoring unit in Fig. 31).
(4) The packet is controlled according to the action of the set filter.
(5) When a dynamic filter entry is generated, its valid term is set in the lifetime shown in Fig. 23. If the valid term expires, the dynamic filter entry is dynamically deleted by the packet controlling unit (steps S209 to S210 to S211 of the packet controlling unit in Fig. 26).

The preferred embodiments according to the present invention were explained with reference to the drawings. As a matter of course, a network device or a server, to which the present invention is applied, is not limited to the above described preferred embodiments, and may be a single device, a system composed of a plurality of devices or an integrated device, or a system which performs processes via a network such as a LAN, a WAN, etc., as long as its functions are executed.

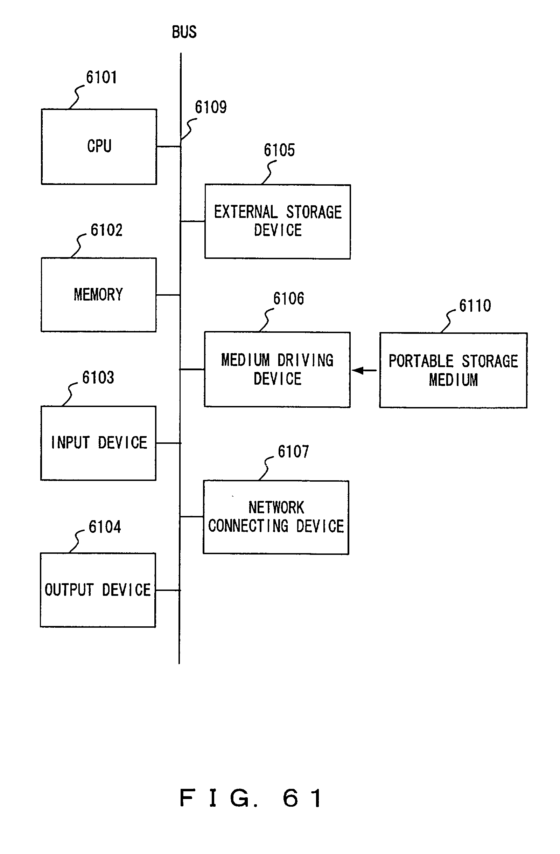

As shown in Fig. 61, the network device or the server can be implemented by a system configured by a CPU 6101, a memory 6102 such as a ROM or a RAM, an input device 6103, an output device 6104, an external storage device 6105, a medium driving device 6106, a portable storage medium 6110, and a network connecting device 6107, which are interconnected by a bus 6109. Namely, the memory 6102 such as a ROM or a RAM, the external storage medium 6105, or the portable storage medium 6110, which records a program code of software implementing the system according to the above described preferred embodiments, is provided to the network device or the server, and a computer of the network device or the server reads and executes the program code, so that the system according to the preferred embodiments can be also implemented as a matter of course.

In this case, the program code itself read from a portable storage medium 146, etc. implements new functions of the present invention, and the portable storage medium 6110, etc. recording the program code configure the present invention.

As the portable storage medium 6110 for providing the program code, for example, a flexible disk, a hard disk, an optical disc, a magneto-optical disc, a CD-ROM, a CD-R, a DVD-ROM, a DVD-RAM, a magnetic tape, a nonvolatile memory card, a ROM card, a storage medium of various types recorded via the network connecting device 6107 (a communications line in other words) such as e-mail, a personal computer communication, etc. are available.

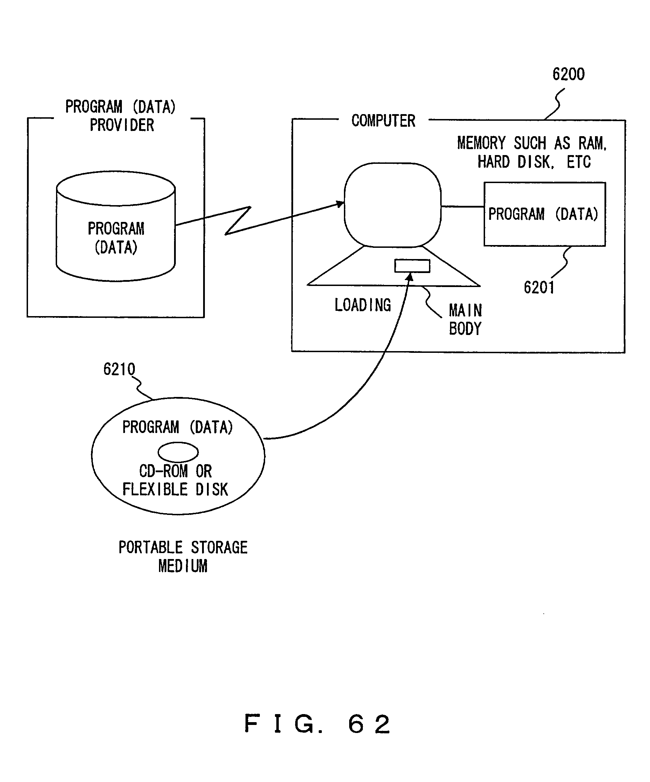

Additionally, as shown in Fig. 62, a computer 6200 executes the program code read into the memory 6201, so that the functions according to the preferred embodiments can be implemented. Or, an OS running on the computer 6200 executes part or the whole of an actual process based on the instructions of the program code, whereby the functions of the above described preferred embodiments can be also implemented.

Furthermore, after the program code read from the portable storage medium 6210 or a program (data) provided from a program (data) provider is written to the memory 6201 comprised by a function extension board inserted into the computer 6200 or a function extension unit connected to the computer 6200, a CPU, etc. comprised by the function extension board or unit executes part or the whole of the actual process based on the instructions of the program code, whereby the functions according to the preferred embodiments can be also implemented.

Namely, the present invention is not limited to the above described preferred embodiments, and can implement various configurations or shapes in a scope which does not deviate from the gist of the present invention.

As described above, according to the present invention has the following effects.
(1) Host identification which does not depend on an IP address, so that service control information can be set/distributed to a host having a variable address.
(2) A host can be connected to an arbitrary connection point, and can receive a service the quality of which is guaranteed under the same condition from a network.
(3) Compared with the existing inventions having the same effects, the immediacy of service application is high.
(4) Cooperation is made with regulation filters, thereby enabling an effective use of network resources.

## Claims

1. A service control network having a network device (2) accommodating a terminal (1), and a server (3) authenticating the terminal (1), and providing a service to the terminal (1), wherein:
the server (3) comprises a service control information database (32) storing identification information of the terminal (1) by using a network access identifier, makes a correspondence between the network access identifier and an IP address that the network device (2) accommodating the terminal (1) assigns to the terminal (1) at the timing of being connected to the terminal (1), and distributes to a necessary path service control information where the network access identifier is converted into the IP address; and
the network device (2) performs a transfer control of a packet based on the service control information distributed from the server (3) by using the IP address as identification of the terminal (1).

2. The service control network according to claim 1, wherein:
the service control information is classified into static service control information and dynamic service control information;
the static service control information is distributed to a necessary path immediately after an authentication operation for authenticating the terminal (1) is executed; and
the dynamic service control information is distributed to a necessary path at the timing when a packet is transmitted.

3. The service control network according to claim 2, wherein
a service profile is classified into fundamental service information which uniformly distributes QoS (Quality of Service) in upstream and downstream directions of the terminal (1), and extended service information which can individually distribute a destination address in the upstream direction, and a source address in the downstream direction.

4. The service control network according to claim 3, wherein
the service control information in the downstream direction is put on a hop-by-hop option of the IPv6 (Internet Protocol Version 6), and notified to a target network device (2) in order to prevent service control information which does not specify a particular address from being distributed to all of network devices (2) under the control of the server (3).

5. A server (3) authenticating a terminal (1) that a network device (2) accommodates, comprising:
a service control information database (32) storing identification information of the terminal (1) by using a network access identifier;
a service profile controlling unit (33) having an address cache for making a correspondence between an IP address that the network device (2) accommodating the terminal (1) assigns to the terminal (1) and the network access identifier, and converting service control information into a format that a network device (2) under the control of the server (3) can interpret for a network control request specifying the network access identifier; and
a service profile distributing unit (34) identifying a distribution destination of the service control information, and distributing the service control information, wherein
a correspondence is made between the network access identifier and an IP address that the network device (2) accommodating the terminal (1) assigns to the terminal (1) at the timing of being connected to the terminal (1), and
service control information where the network access identifier is converted into the IP address is distributed to a necessary path.

6. The server (3) according to claim 5, further comprising:
an authentication controlling unit (30) detecting a network access from the terminal (1) based on execution of an authentication operation for authenticating the terminal (1), and registering to the address cache a network access identifier of a terminal (1) that makes an authentication request, and an IP address notified from the network device (2); and
a service profile generating unit providing to said authentication controlling unit (30) an interface for obtaining the IP address from the network access identifier of the terminal (1) that makes the authentication request, wherein
said service profile distributing unit (34) has a correspondence table between a network prefix and a network device (2), and determines a distribution destination of a service profile according to a source address of a service profile where a network access identifier is converted into an IP address by said service profile generating unit.

7. The server (3) according to claim 6, wherein:
said service profile distributing unit (34) accumulates a service profile converted into a format that the network device (2) can interpret in a queue for each network device (2) obtained from a source address; and
said authentication controlling unit (30) extracts a service profile to be distributed to a network device (2) at a transmission destination from a queue corresponding to the network device (2) at the transmission destination, when generating an authentication reply message in response to the authentication request message from the network device (2), and multiplexes a plurality of service profiles in the message.

8. The server (3) according to claim 6, wherein:
said service profile distributing unit (34) has a queue for a different network device (2), and accumulates a service profile in a queue for each network device (2) when an authentication request is made from the different network deice;
said authentication controlling unit (30) extracts service control information to be distributed to the network device (2) from a queue corresponding to a domain which makes the authentication request when generating an authentication reply message in response to the authentication request message, and transmits the extracted service control information as the authentication reply message; and
a server (3) at a authentication request source extracts the service profile notified with the authentication reply message, and accumulates the extracted service profile in a queue for a network device (2) under the control of the server (3).

9. A network device (2) accommodating a terminal (1), and performing a transfer control of a packet based on service control information that is distributed as identification of the terminal (1) from a server (3), which authenticates the terminal (1), comprises a service control information database (32) storing the identification of the terminal (1) by using a network access identifier, makes a correspondence between the network access identifier and an IP address that the network device (2) accommodating the terminal (1) assigns to the terminal (1), and distributes to a necessary path service control information where the network access identifier is converted into the IP address, comprising:
an attendant unit (22) permitting a network access of a user who makes an authentication request, and IP address assignment by exchanging authentication request and reply messages with an authentication controlling unit (30) which is comprised by the server (3), detects a network access from the terminal (1) based on execution of an authentication operation for authenticating the terminal (1), and registers to an address cache a network access identifier of the terminal (1) that makes the authentication request, and the IP address notified from the network device (2); and
a service controlling unit (23) dividing and managing multiplexed service control information notified from the server (3) in units of terminals (1).

10. The network device (2) according to claim 9, wherein:
the service control information is classified into static service control information, which is distributed to a necessary path immediately after the authentication operation for authenticating the terminal (1) is executed, and dynamic service control information, which is distributed to a necessary path at the timing when a packet is transmitted;
an assignable IP address is registered to a static packet filter which filters a packet by referencing a source IP address;
packet discarding is registered as an action of an entry of the static packet filter; and
the action is replaced with a service profile which is returned from the server (3) with the authentication reply message, and corresponds to the IP address assigned to the terminal (1), when the authentication operation for the terminal (1) is executed.

11. The network device (2) according to claim 10, wherein:
if a source IP address of a packet mismatches the static packet filter which filters a packet by referencing a source IP address, it is determined whether or not the source IP address of the packet is being assigned;
if it is determined that the source IP address is being assigned, service control information distributed from the server (3) is registered to the static packet filter and the address cache; and
if it is determined that the source IP address is not being assigned, service control information specifying packet discarding is registered to the static packet filter and the address cache.

12. The network device (2) according to claim 10, further comprising
an access monitoring unit (21) logging a packet passing through the static packet filter to which the service profile specifying packet discarding is distributed, and issuing warning if a predetermined number or more of accesses are made.

13. The network device (2) according to claim 11, further comprising
an access monitoring unit (21) logging a packet passing through the static packet filter to which the service profile specifying packet discarding is distributed, and issuing warning if a predetermined number or more of accesses are made.

14. A network device (2) accommodating a terminal (1), comprising
an attendant unit (22) transmitting a service request message to the server (3) according to claim 6, and downloading service control information about the server (3) with a service reply message, if an authentication request from the terminal (1) is not made for a predetermined time period.

15. The network device (2) according to claim 9, wherein:
a traffic class field is edited when a packet is transferred, and a control code for setting and inserting a service profile in a downstream direction in an IPv6 hop-by-hop option is set in an action of an entry of a dynamic packet filter which is dynamically set when the packet is received, or the static packet filter which is set when the terminal (1) is authenticated; and
if a packet including the hop-by-hop option is received, the packet is set in the dynamic packet filter.

16. The network device (2) according to claim 10, wherein:
a traffic class field is edited when a packet is transferred, and a control code for setting and inserting a service profile in a downstream direction in an IPv6 hop-by-hop option is set in an action of an entry of a dynamic packet filter which is dynamically set when a packet is received, and the static packet filter which is set when the terminal (1) is authenticated; and
if a packet including the hop-by-hop option is received, the packet is set in the dynamic packet filter.

17. The network device (2) according to claim 11, wherein:
a traffic class field is edited when a packet is transferred, and a control code for setting and inserting a service profile in a downstream direction in an IPv6 hop-by-hop option is set in an action of an entry of a dynamic packet filter which is dynamically set when a packet is received, and the static packet filter which is set when the terminal (1) is authenticated; and
if a packet including the hop-by-hop option is received, the packet is set in the dynamic packet filter.

18. The network device (2) according to claim 12, wherein:
a traffic class field is edited when a packet is transferred, and a control code for setting and inserting a service profile in a downstream direction in an IPv6 hop-by-hop option is set in an action of an entry of a dynamic packet filter which is dynamically set when a packet is received, and the static packet filter which is set when the terminal (1) is authenticated; and
if a packet including the hop-by-hop option is received, the packet is set in the dynamic packet filter.

19. The network device (2) according to claim 13, wherein:
a traffic class field is edited when a packet is transferred, and a control code for setting and inserting a service profile in a downstream direction in an IPv6 hop-by-hop option is set in an action of an entry of a dynamic packet filter which is dynamically set when a packet is received, and the static packet filter which is set when the terminal (1) is authenticated; and
if a packet including the hop-by-hop option is received, the packet is set in the dynamic packet filter.

20. The network device (2) according to claim 14, wherein:
a traffic class field is edited when a packet is transferred, and a control code for setting and inserting a service profile in a downstream direction in an IPv6 hop-by-hop option is set in an action of an entry of a dynamic packet filter which is dynamically set when a packet is received, and the static packet filter which is set when the terminal (1) is authenticated; and
if a packet including the hop-by-hop option is received, the packet is set in the dynamic packet filter.

21. A computer-readable storage medium on which is recorded a service information distribution program for causing a network device (2) accommodating a terminal (1) to execute a process, the process comprising:
performing a transfer control of a packet based on service control information that is distributed as identification of the terminal (1) from a server (3);
permitting a network access of a user who makes an authentication request, and IP address assignment by exchanging authentication request and reply messages with an authentication controlling unit (30) which is comprised by the server (3), detects a network access from the terminal (1) based on execution of an authentication operation for authenticating the terminal (1), registers to an address cache a network access identifier of the terminal (1) that makes the authentication request, and an IP address notified from the network device (2); and
dividing and managing multiplexed service control information notified from the server (3) in units of terminals (1).

22. The computer-readable storage medium according to claim 21, the process further comprising:
registering an assignable IP address to a static packet filter which filters a packet by referencing a source IP address;
registering packet discarding as an action of an entry of the static packet filter; and
replacing the action with a service profile which is returned from the server (3) with the authentication reply message, and corresponds to the IP address assigned to the terminal (1).

23. A service information distribution program for causing a network device (2) accommodating a terminal (1) to execute a process, the process comprising:
performing a transfer control of a packet based on service control information that is distributed as identification of the terminal (1) from a server (3);
permitting a network access of a user who makes an authentication request, and IP address assignment by exchanging authentication request and reply messages with an authentication controlling unit (30) which is comprised by the server (3), detects a network access from the terminal (1) based on execution of an authentication operation for authenticating the terminal (1), and registers to an address cache a network access identifier of the terminal (1) that makes the authentication request, and an IP address notified from the network device (2); and
dividing and managing multiplexed service control information notified from the server (3) in units of terminals (1).

24. The service information program according to claim 23, the process further comprising:
registering an assignable IP address to a static packet filter which filters a packet by referencing a source IP address;
registering packet discarding as an action of an entry of the static packet filter; and
replacing the action with a service profile that is returned from the server (3) with the authentication reply message, and corresponds to the IP address, when the authentication operation for authenticating the terminal (1) is executed.

25. A service information distribution method executed by a network device (2) which accommodates a terminal (1), comprising:
performing a transfer control of a packet based on service control information that is distributed as identification of the terminal (1) from a server (3) ;
permitting a network access of a user who makes an authentication request, and IP address assignment by exchanging authentication request and reply messages with an authentication controlling unit (30) which is comprised by the server (3), detects a network access from the terminal (1) based on execution of an authentication operation for authenticating the terminal (1), and registers to an address cache a network access identifier of the terminal (1) that makes the authentication request, and an IP address notified from the network device (2); and
dividing and managing multiplexed service control information notified from the server (3) in units of terminals (1).

26. The service information distribution method according to claim 25, further comprising:
registering an assignable IP address to a static packet filter which filters a packet by referencing a source IP address;
registering packet discarding as an action of an entry of the static packet filter; and
replacing the action with a service profile that is returned from the server (3) with the authentication reply message, and corresponds to the IP address, when the authentication operation for authenticating the terminal (1) is executed.
